# EUROPEAN PATENT APPLICATION

(11) **EP 4 697 248 A1**
(43) Date of publication of application: **18.02.2026**
(21) Application number: 25195203.2
(22) Date of filing: 11.08.2025
(51) Int. Cl.: G06Q 10/0631, G06Q 10/105, G06Q 10/1057

(54) **STATUS AND MONITORING PLATFORM**

(30) Priority: 12.08.2024 IN 202411060821
(71) Applicant: ADP, Inc., Roseland, NJ 07068 (US)
(72) Inventor: KATAM, Savitri, 07068 Roseland (US); MEEGADA, Bhavani, 07068 Roseland (US); NAGALLA, Monika, 07068 Roseland (US); BATHINI, Haneesh, 07068 Roseland (US); KUMAR TELLURI, Pavan, 07068 Roseland (US); KHARE, Parag, 07068 Roseland (US); SINGH, Harsh, 07068 Roseland (US)
(74) Representative: Morrall, Jonathan Ian McLachlan

(57) **Abstract**

A status and monitoring platform for resource bandwidth is provided. A system can retrieve, responsive to a request for bandwidth of a resource, a data set that can include at least one constraint related to the resource and historic utilization of the resource. The system can construct, based on the data set, a data structure to replace the request. Based on the data structure, the system can generate a prompt indicating the constraint and the historic utilization. The system can identify, based on the prompt, a model trained with generative artificial intelligence to determine resource bandwidth. The system can input the prompt into the model to generate an output that indicates the bandwidth of the resource and validate the output based on a comparison with a threshold. The system can transmit for display, via an interface, responsive to the validation, an indication of resource bandwidth output by the model.

## Description

### CROSS-REFERENCES TO RELATED APPLICATIONS

This application claims priority under 35 U.S.C. § 119 to an Indian Provisional Patent Application No. 202411060821, titled "MODEL BASED RESOURCE AVAILABILITY PLATFORM," and filed August 12, 2024, which is hereby incorporated by reference herein in its entirety and for all purposes.

### TECHNICAL FIELD

This application is generally related to computing technology, and particularly to a computing technology solution for providing a status and monitoring platform to address responses to client device requests.

### BACKGROUND

Advancements in data processing have transformed numerous industries in terms of automated decision-making, predictive analytics, and efficient data handling. These capabilities can improve operational efficiency, particularly in managing complex data interactions and transactional workflows within digital environments.

### SUMMARY

Aspects of the technical solutions described in this application can process queries for resources received from a computing device using machine learning or artificial intelligence-based processing. For example, when servicing queries regarding resources, factors reflected by historical data and constraints can impact the outcome or query response. These factors can involve changes to various constraints, parameters or attributes, any of which can change at any time due to updates to geographic-based constraints, as well as any changes to entity-level constraints or parameters. Therefore, it can be technically challenging for machine learning or artificial intelligence ("AI") based models trained to service queries on resources to reliably, accurately or efficiency respond to queries, as changes can occur frequently, leading to inaccurate and unreliable system responses to the queries. While machine learning or artificial intelligence based models can be retrained to account for changes to entity limitations or constraints, implementing such retraining every time a constraint or limitation is modified can lead to prolonged system downtime and numerous retraining processes, which are both compute and resource-intensive and adversely impact the system's energy efficiency. The technical solutions described in this application overcome these challenges by utilizing generative AI models trained with historical data and constraints while also deploying a threshold-based validations of the responses that can account for untrained changes and improve the response accuracy and reliability. This approach can maintain and improve the reliability and accuracy of the system's determinations, even in the absence of timely retraining to account for changes in regulations, constraints, or other factors that impact generative AI model-based responses to queries on resource availability or use.

Resource bandwidth or availability information for digital accounts can depend on a variety of data sources, regulatory rules and guidelines, and organizational policies, each of which can change over time or differ across geographical regions. As entities can have employees across various geographical regions, the management of employee resources can include leave entitlements, payroll compensation, or expense items, each of which can rely on aggregation of historic utilization data, constraints imposed by regulations, and account-specific parameters. The data associated with availability or bandwidth of such resources can be distributed across multiple systems, repositories or platforms and include information such as account identifiers, resource parameters, and policy-based limitations. The integration of such heterogeneous data that can be subject to unexpected updates or changes based on evolving rules or constraints can result in technical challenges to provide accurate and reliable resource availability or bandwidth responses to real-time user requests.

The technical solutions described herein can use a machine learning model-based resource bandwidth or availability platform to accurately and reliably process resource availability requests using a data set corresponding to a resource to generate a data structure replacing the request in the process of generating the automated response. The data structure can indicate the context and one or more characteristics of the electronic account, indicative of a parameter for the resource and data associated with the electronic account. The technical solutions can utilize the data structure to generate a prompt that corresponds to the constraint for the resource parameter and utilization data, based on geographical data. The technical solutions can identify a model trained with generative artificial intelligence to provide an output indicative of the resource availability or bandwidth, as well as validate the output based on a comparison with a threshold. Responsive to the validation, the technical solutions can transmit the indication of the availability or bandwidth of the resource to a remote device for display, thereby improving the accuracy and the reliability of the response and accounting for any potential changes to the status or availability of the inquired resource.

At least one aspect relates to a system. The system can include one or more processors coupled with memory. The one or more processors can retrieve, responsive to a request from a remote device for bandwidth or availability of a resource of an electronic account, a data set corresponding to the resource and comprising utilization data of the resource and a constraint related to the resource. The one or more processors can construct, based on the data set, a data structure to replace the request, the data structure indicating a context of the data structure and one or more characteristics of the electronic account. The one or more characteristics can be indicative of a parameter for the resource and data associated with the electronic account. The one or more processors can generate, based on the data structure, a prompt with a first portion corresponding to the constraint for the parameter of the resource and a second portion corresponding to the utilization data of the resource according to geographical data. The one or more processors can identify, based on the prompt, a model trained with generative artificial intelligence to determine resource bandwidth or availability based on the one or more characteristics and according to the context. The one or more processors can input the prompt into the model to generate an output that indicates the bandwidth or availability of the resource. The one or more processors can validate the output based on a comparison with a threshold. The one or more processors can transmit for display, via an interface, responsive to the validation, to the remote device an indication of the bandwidth or availability of the resource output by the model on a display of the remote device.

For example, the one or more processors can construct, based on at least a type of the resource, a type of data structure for the type of the resource. The one or more processors can select, based on the type of the data structure, a type of prompt from a plurality of types of prompts, and generate, responsive to the selection, the prompt. The one or more processors can identify historical data corresponding to the resource. The historical data can be indicative of a prior utilization of the resource associated with the electronic account. The one or more processors can compare the output to the historical data to determine whether the output deviates from the historical data by more than a deviation threshold. The one or more processors can generate, responsive to the output deviating from the historical data by more than the deviation threshold, an anomaly alert, and store the anomaly alert in a data repository in association with the electronic account. The resource can include, for example, a leave entitlement, a payroll compensation, a reimbursement, an expense item, a training credit, a travel allowance, a retirement plan contribution, a stock option, or an access permission.

The one or more processors can receive, from the model, a value for the parameter of the resource, and validate the value of the output based on the comparison of the value with the constraint. The constraint can be, for example, a limitation corresponding to use of the resource. The one or more processors can identify a plurality of validation rules to validate the output. Each rule of the plurality of validation rules can correspond to at least one of a regulation for a geographical area corresponding to the resource, a policy of an entity associated with the electronic account, or a limitation of the resource for a project associated with the electronic account. The one or more processors can validate the output according to at least a rule of the plurality of validation rules, and generate, in response to the rule not being satisfied, the indication that the resource is not available.

The one or more processors can compare the parameter of the output to a plurality of thresholds to validate the output. The plurality of thresholds can include two or more of: a limitation for the resource from a regulation of a geographical region associated with the electronic account, a limitation for the resource established by an entity of the electronic account, a limitation for the resource based on the utilization data, or a constraint on the resource associated with a group of electronic accounts comprising the electronic account.

The one or more processors can store at least one of: the data set, the data structure, and the output in a data repository as a record data structure associated with the electronic account. The one or more processors can associate a record identifier with the record data structure and retrieve the stored record data structure in response to a subsequent request comprising the record identifier. The system can format the indication for display in accordance with a format for the interface of the remote device selected from a plurality of formats of interfaces based on a type of the remote device. Each format of the plurality of formats of interfaces can define at least one of a data entity, a data format, or a communication protocol for transmitting the indication to the remote device.

The one or more processors can validate the output based on a comparison of a type of the output with the threshold for the type of the output, where the threshold is defined based on a constraint that is defined by a regulation of a geographical area associated with the electronic account. The one or more processors can authenticate a user associated with the request using authentication information associated with the electronic device, and retrieve, responsive to the authentication, the data set from a data repository. The one or more processors can generate the prompt using a template selected from a plurality of prompt templates. Each prompt template can be associated with a type of the resource of a plurality of types of resources. The one or more processors can transmit for display, via the interface of the remote device, a visualization comprising one of a chart or a graph of the output indicating a remaining balance of the resource.

The one or more processors can generate, in response to the validation of the output, a control instruction, the control instruction comprising at least one of: a resource identifier, an account identifier, or a validated parameter of the output corresponding to the resource, transmit, via an application programming interface, the control instruction to a remote system associated with the electronic account to cause the remote system to execute an automated operation for processing the resource, and receive, from the remote system, a confirmation that the automated operation for processing the resource is executed. The automated operation can include, for example, an operation to update a leave balance of the electronic account, an operation to initiate a payroll process of the electronic account, an operation to record an expense reimbursement for the electronic account, or an operation to modify an entitlement record for the electronic account.

At least one other aspect relates to a method. The method can be performed, for example, by one or more processors coupled with memory. The method can include the one or more processors retrieving, responsive to a request from a remote device for bandwidth or availability of a resource of an electronic account, a data set corresponding to the resource and comprising utilization data of the resource and a constraint related to the resource. The method can include the one or more processors constructing, based on the data set, a data structure to replace the request. The data structure can indicate a context of the data structure and one or more characteristics of the electronic account. The one or more characteristics can be indicative of a parameter for the resource and data associated with the electronic account. The method can include the one or more processors generating, based on the data structure, a prompt with a first portion corresponding to the constraint for the parameter of the resource and a second portion corresponding to the utilization data of the resource according to geographical data. The method can include the one or more processors identifying, based on the prompt, a model trained with generative artificial intelligence to determine resource bandwidth or availability based on the one or more characteristics and according to the context. The method can include the one or more processors inputting the prompt into the model to generate an output that indicates the bandwidth or availability of the resource. The method can include the one or more processors validating the output based on a comparison with a threshold. The method can include the one or more processors transmitting for display, via an interface, responsive to the validation, to the remote device an indication of the bandwidth or availability of the resource output by the model on a display of the remote device.

For example, the method can include the one or more processors constructing, based on at least a type of the resource, a type of a data structure for the type of the resource. The method can include the one or more processors selecting, based on the type of the data structure, a type of the prompt from a plurality of types of prompts. The method can include the one or more processors generating, responsive to the selection, the prompt. The method can include the one or more processors identifying historical data corresponding to the resource. The historical data can be indicative of a prior utilization of the resource associated with the electronic account. The method can include the one or more processors comparing the output to the historical data to determine whether the output deviates from the historical data by more than a deviation threshold. The method can include the one or more processors generating, responsive to the output deviating from the historical data by more than the deviation threshold, an anomaly alert. The method can include the one or more processors storing the anomaly alert in a data repository in association with the electronic account. The resource can include, for example, a leave entitlement, a payroll compensation, a reimbursement, an expense item, a training credit, a travel allowance, a retirement plan contribution, a stock option, or an access permission.

At least one other aspect relates to a non-transitory computer-readable medium. The non-transitory computer-readable medium can store instructions which, when executed by one or more processors, cause the one or more processors to retrieve, responsive to a request from a remote device for bandwidth or availability of a resource of an electronic account, a data set corresponding to the resource and comprising utilization data of the resource and a constraint related to the resource. The instructions can cause construction, based on the data set, of a data structure to replace the request, the data structure indicating a context of the data structure and one or more characteristics of the electronic account, the one or more characteristics indicative of a parameter for the resource, and data associated with the electronic account. The instructions can cause generation, based on the data structure, of a prompt with a first portion corresponding to the constraint for the parameter of the resource and a second portion corresponding to the utilization data of the resource according to geographical data. The instructions can cause identification, based on the prompt, of a model trained with generative artificial intelligence to determine resource bandwidth or availability based on the one or more characteristics and according to the context. The instructions can cause input of the prompt into the model to generate an output that indicates the bandwidth or availability of the resource. The instructions can cause validation of the output based on a comparison with a threshold. The instructions can cause transmission for display, via an interface, responsive to the validation, to the remote device, an indication of the bandwidth or availability of the resource output by the model on a display of the remote device.

These and other aspects and implementations are discussed in detail below. The foregoing information and the following detailed description include illustrative examples of various aspects and implementations and provide an overview or framework for understanding the nature and character of the claimed aspects and implementations. The drawings provide illustration and a further understanding of the various aspects and implementations, and are incorporated in and constitute a part of this specification. Aspects can be combined, and it will be readily appreciated that features described in the context of one aspect of the solution can be combined with other aspects. Aspects can be implemented in any convenient form, for example, by appropriate computer programs, which may be carried on appropriate carrier media (computer readable media), which may be tangible carrier media (e.g., disks) or intangible carrier media (e.g., communications signals). Aspects may also be implemented using any suitable apparatus, which may take the form of programmable computers running computer programs arranged to implement the aspect. As used in the specification and in the claims, the singular form of 'a,' 'an,' and 'the' include plural referents unless the context clearly dictates otherwise.

### BRIEF DESCRIPTION OF THE DRAWINGS

Aspects of the technical solutions are described in the detailed description which follows, in reference to the noted plurality of drawings by way of non-limiting examples of exemplary embodiments of the technical solutions described herein.
FIG. 1 depicts an example of a system for providing model-based resource availability platform for improving responses to client requests on resource availability.
FIG. 2 depicts an architecture of a computing system implemented in embodiments of the technical solutions described herein.
FIG. 3 depicts a cloud computing environment 300 in accordance with aspects of the technical solutions described herein.
FIG. 4A depicts an example system utilizing application programming interface (API) calls to implement a model-based resource availability automated service for client requests.
FIG. 4B is a block diagram of an example architecture of a data processing system for managing resource availability using modular data provider components and API integrations, in accordance with one or more implementations.
FIG. 4C is a block diagram of an example system architecture for routing user account data through privacy management functions before processing transactions, in accordance with one or more implementations.
FIG. 5 depicts a flow diagram of a method for implementing model-based resource availability platform for improving responses to client requests using API functionality.
FIGs. 6-7 depict examples of output contents of an interface displayed on the client device in response to client device requests on resource availability associated with accounts.
FIG. 8 illustrates an example of an output content of an interface along with visualizations of the inquired resources associated with an account of the user.
FIG. 9 illustrates an example of a collection of data structures that can be utilized by the data processing system for generation of prompts or indications.
FIG. 10 depicts a flow diagram of a method for providing model-based resource availability platform for improving responses to client requests.

### DETAILED DESCRIPTION

Following below are more detailed descriptions of various concepts related to, and implementations of, methods, apparatuses, and systems provide a status and monitoring platform. The various concepts introduced above and discussed in greater detail below can be implemented in any of numerous ways.

This application relates to techniques for providing model-based resource bandwidth or availability analysis in response to requests from client devices within digital environments. Many organizations can use digital systems to manage resources such as leave entitlements, payroll compensation, expense items, or access permissions. Such systems can interact with a variety of data sources, including databases, application programming interfaces, and cloud-based repositories. The data associated with resource bandwidth or availability can include historical usage records, policy-based constraints, and account-specific parameters. The resource management platforms can be deployed across distributed computing environments, such as enterprise networks or cloud infrastructures, where users can submit queries regarding the availability or status of resources linked to electronic accounts.

Determining resource bandwidth or availability in digital systems can be technically challenging as heterogeneous data sources, evolving regulations, or adapting to frequent changes in organizational policies can each impact the output of a resource bandwidth or availability determination at any time. While static rule sets or manually updated logic can be used to process resource queries, such approaches can be limited in their ability to account for dynamic regulatory updates, regional variations, or real-time changes to account entitlements. Updating such static solutions can be energy and computing resource intensive, as model retraining can utilize substantial computational resources while still not resolving the reliability issues caused by the fact that the geographical regulations can update at any time, undermining the reliability of the outputs.

The techniques described herein can address these challenges by using a model-based resource bandwidth or availability platform that can process resource queries using generative artificial intelligence models trained on historical data and constraints. The techniques described herein can retrieve, in response to a request for resource bandwidth or availability, a data set that includes at least one constraint related to the resource and the historical utilization of the resource. The techniques described herein can construct, based on the data set, a data structure to replace the request in the course of generating the automated response. The data structure can indicate a context and characteristics of the electronic account that are indicative of a parameter for the resource, as well as data associated with the electronic account. The technical solutions described herein can generate a prompt with a first portion corresponding to the constraint and a second portion corresponding to the utilization data of the resource. The techniques described herein can identify, based on the prompt, a model trained with generative artificial intelligence to determine resource bandwidth or availability, based on the prompt input into the model. The output of the model indicating the availability of the resource can be validated by comparing it with a threshold, and an indication of the availability of the resource can be displayed on a remote device via an interface and responsive to the validation.

The technical solutions described herein provide specific improvements to the functioning of computer-based resource management platforms, reducing the reliance on repeated manual updates or static system retraining when regulatory or policy changes occur. These improvements conserve system energy and computational resources by avoiding compute-intensive retraining of machine learning models when updates to underlying data occur. The technical solutions implement multiple specialized modules, such as data collectors, data structure and generators, model selectors, or validator functions, which operate in a coordinated architecture to automate compliance and adaptability across distributed computing environments. By dynamically constructing context-aware data structures and generating data structure-based machine learning model prompts, the technical solutions reliably and efficiently provide current, constraint-sensitive resource bandwidth or availability determinations at enterprise scale and in the face of real-time data updates. This practical application solves a tangible computing problem and results in measurable system-level improvements to the computing system.

The technical solutions provide a technical effect by allowing for a dynamic, automated determination and adaptation of resource bandwidth or availability outcomes in response to real-time changes in regulations, organizational policies, and resource usage data in a complex, distributed computing environment. By reducing system latency, improving output accuracy and reliability, and minimizing manual intervention and computational resource consumption, the disclosed platform enhances the operation of enterprise resource management solutions. The technical solutions thus address the technical problem of maintaining compliant, up-to-date resource determinations at scale, resulting in improvements such as faster response, improved data integrity, greater energy efficiency, and increased operational reliability across computer systems.

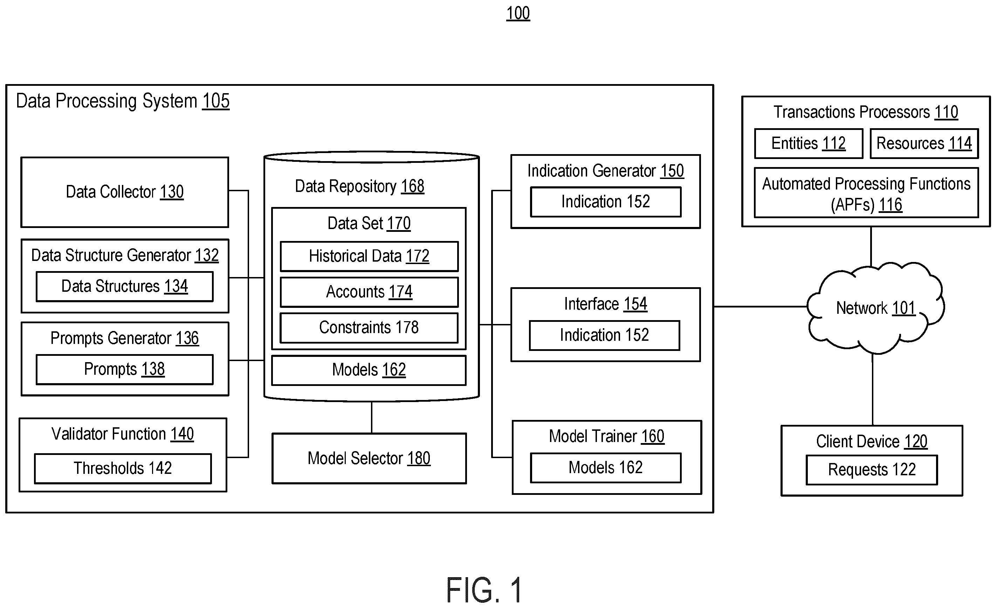

FIG. 1 depicts an example system 100 for providing a model-based resource bandwidth or availability platform for delivering automated, up-to-date, and reliable responses to client requests on bandwidth or availability of various resources across a distributed system. The example system 100 can include a data processing system 105, which can include or be processed using one or more processors (e.g., 215) coupled with memory (e.g., 225) that can store instructions for implementing the functionalities of the data processing system 105. The example system 100 can include, interface with, access, or communicate with (e.g., via network 101), or otherwise utilize one or more of a transactions processors 110. Transactions processors 110 can be provided on the same or different computational platforms (e.g., computing servers or cloud-based environments) as those of the data processing system 105 and can correspond to the same or different entities (e.g., corporations or enterprises) utilizing various data formats and computing platforms. Data processing system 105 can also communicate (e.g., via a network 101) with one or more client devices 120 that can be used to send user requests 122 seeking information on bandwidth or availability of resources 114 and display generated indications 152 generated by the data processing system 105.

The data processing system 105 can include, access, or otherwise utilize one or more data collectors 130 that are designed, constructed and operational to receive, request, access, or otherwise obtain data set corresponding to resources 114 (e.g., vacation days, payroll transactions, leave entitlements, expense reimbursements, personal time off data, or any other resources of entity employees). The data processing system 105 can include, access, process, or otherwise utilize one or more data structure generators 132 for generating data structures 134 using data sets 170 associated with electronic accounts 174 of requesting users. The data processing system 105 can include, access or otherwise utilize one or more prompts generators 136 designed, constructed or operational to generate, construct or determine prompts 138 based on the data structures 134. The prompts 138 can be configured to be used by output generator 150 as inputs into machine learning models 162 (e.g., generative artificial intelligence models) to determine outputs 156 on the bandwidth or availability of the resources 114 inquired about in the client device request 122.

The data processing system 105 can include, access, or otherwise utilize one or more model selectors 180 designed, constructed, and operational to select, identify, or determine specific models 162 to utilize or apply for determining the bandwidth of the requested resources 114, based on the type of the inquired resource 114. The bandwidth can refer to or include, for example, the availability of the requested resource. The data processing system 105 can include, access, or otherwise utilize one or more output generators 150 designed, constructed, and operational to generate outputs 156 (e.g., via models 162) about the bandwidth of the resources 114 and provide indications 152 of such determined outputs 156. The output generator 150 can be configured to use the prompt 138 and the model 162, along with any automated processing functions (APFs) 116 on transactions processors 110 for any specific entities 112, to generate the outputs 156. The data processing system 105 can include, access, or otherwise utilize one or more validator functions 140 designed, constructed, and operational to validate the output 156 based on one or more thresholds 142. The data processing system 105 can include, access, or otherwise utilize one or more interfaces 154 to communicate the indications 152 of the outputs 156 to the requesting client devices 120 (e.g., via a network 101), thereby serving indications 152 to be displayed on the client devices responsive to the client requests 122. The data processing system 105 can include, access, or otherwise utilize one or more model trainers 160 designed, constructed, and operational to train models 162 using machine learning, obtain feedback associated with performance of the models, and update the models using machine learning and based on the feedback.

The data processing system 105 can include a data repository 168. Various components of the data processing system 105 (e.g., data collector 130, prompts generator 136, validator function 140, output generator 150, model selector 180, or model trainer 160) can interface with or access the data repository 168 to store or use any data in the data set 170. The data set 170 can include one or more of historical utilization data 172, such as any historical data on utilizing specific individual resources 114 over time. For instance, the data set 170 can include utilization historical data on specific resources 114 for various accounts 174, such as data on historical use of leave of absence days, data on historical expense requests, data on historical payroll inquiries, data on historical travel allowances, education or training credits or allowances, retirement plan contributions, stock options or access permissions. The repository 168 can include information on accounts 174 (e.g., accounts of employees or users) as well as any constraints 178 related to the resources 114. Data repository 168 can store one or more models 162 that can include or utilize generative AI trained to determine resource bandwidth for various accounts 174 using historical data 172 on prior use of resources 114 or any constraints 178 on resource usage.

The data processing system 105 can include, or be communicatively coupled with (e.g., via a network 101), at least one logic device such as a transactions processor 110. The transactions processors 110 can be, include, or be executed on, a computing device having a processor to implement automated processing functions (APFs) 116 for processing transactions involving any type and form of resources 114. The transactions processors 110 can include, be executed on, or utilize, one or more servers, processors, or memories and can be communicatively coupled with the data processing system 105 or the client device 120, either directly or via one or more networks 101. The transactions processors 110 can be included within, may include the data processing system 105, or can be deployed remotely from the data processing system 105.

The transactions processors 110 can include any combination of hardware and software for processing operations or computations on determining the bandwidth of resources 114 for particular entities 112 (e.g., enterprises or organizations) and their associated employee electronic accounts 174. The bandwidth of a resource 114 can refer to or include, for example, the availability of the resource 114 to a user of the particular client account 174. The entities 112 can include different corporations or organizations on behalf of which APFs 116 can be executed for various accounts 174 of users, such as employees of the entities 112. The APFs 116 can include processing functions (e.g., processing applications) for computing or determining outputs of various transactions associated with resources 114, such as operations on payroll, human resource, or other transactional activities based on parameters, rules, policies, or data associated with, configured for, or specific to, individual entities 112. The APFs 116 can be customized for individual entities 112 and individual accounts 174 to implement various APF operations, based on the locations or regions (e.g., countries, counties, states) of the entities 112 or accounts 174 and in accordance with local state regulations or rules of those locations or regions. Transactions processors 110 can execute APF 116 transactions or processes configured or tailored for different sections, groups, or departments of the entities 112, or individual employees associated with such entity's accounts 174. The transactions processors 110 can be employed or utilized by the data processing system 105 using application programming interfaces (APIs) configured to initiate particular APFs 116 for evaluating the state of particular resources 114.

Automated processing functions (APFs) 116 can include any combination of hardware and software, including software applications or functions, for processing, transacting, analyzing, or computing resources 114. APFs 116 can be configured to provide, allocate, transfer, assign, transact, or otherwise manage any resources 114 with respect to any accounts 174 associated with any entities 112. For instance, APFs 116 can include rules or policies (e.g., establishing parameters, decision trees or limitations) for processing resources 114 for the given entity 112 or account 174. APFs 116 can include, for example, any payroll transaction processing functions, such as functions for processing transactions for the accounts 174 of the entities in relation to transactions of pay stubs, employee salaries, bonuses, medical or other benefits, including medical leaves, employee vacations or personal time off days. APF 116 can implement computations or transactions involving sickness entitlement, annual leave (e.g., annual leave balances), payment plans for parental leaves, forfeit of adjustments and balances, buying and selling of leave balances, public holiday adjustments and balances, timesheet to balances, overtime computations, or any other time-related or compensation related transactions or computations. APFs 116 can include transactions for processing time entries, employee clock (e.g., start and stop work time), employee facility access card activity monitoring functions or any other functions associated with behavior or actions of users (e.g., employees) associated with the accounts 174. For example, transactions processors 110 can utilize any APFs 116 to perform one or more payroll functions for entities 112, such as payroll processing functions, human resource management functions, time and attendance tracking functions, benefits administration functions, talent management functions, or analytics and reporting functions, among others. The transactions processors 110 can generate data relating to the payroll functions it performs and store the data in the data repository as historical data 172.

Resources 114 can be any representation of entitlements or assets that the system 100 can compute, process, or transact. Resources 114 can include a wide range of items, such as employee leave entitlements, assets, such as financial compensations, bonuses, and other forms of benefits. For instance, leave entitlements can cover various types of leave, including sick leave, annual leave, vacation days, and parental leave. Assets can include financial compensations, such as salaries, bonuses, overtime payments, and other monetary rewards. Resources 114 can include assets such as training credits, purchase reimbursements, retirement plan investments, travel allowances, and stock options. Resources 114 can include non-monetary benefits like flexible working hours, wellness programs, training hours, classes, and professional development opportunities.

Resources 114 can include payroll-related items such as gross or net wage balances, tax withholdings, employer contributions to pension or provident funds, allowance credits, and overtime accruals. Resources 114 can include Expenditure and expense resources, which can encompass travel expense budgets, business expenditure approvals, conference or training reimbursement quotas, corporate card spending limits, or per diem allocations. Additionally, resources 114 can include commission entitlements, royalty disbursements, milestone bonuses, cost-of-living adjustments, sabbatical credits, long service awards, relocation allowances, hardship allowances, severance or separation payouts, patent filing or maintenance fee budgets, intellectual property royalty shares, research grant funding, wellness incentive points, employee stock purchase plan eligibility, tuition assistance balances, language course credits, and dependent care support funds. Further examples include equipment stipends, home office support credits, uniform or supply allowances, participation slots in leadership or immersion programs, quarterly achievement awards, fuel allowances, parking passes, union or association fee reimbursements, and digital content licenses.

Resources 114 can include various types of leave entitlements, such as sick leaves for health-related absences, annual leaves granting paid vacation time, and parental leaves for new parents to care for their children. Resource 114 can include values or parameters indicating the amount of time (e.g., number of hours, days, weeks, or months) that an individual (e.g., an employee) associated with an account 174 possesses or has in their balance. Resources 114 can include or correspond to any forfeiture of adjustments, addressing scenarios where unused leave may be lost if not utilized within a specific timeframe. Resources 114 can include parameters or values facilitating the buy and sell leave features, allowing account holders to purchase additional leave days or sell excess leave back to the company.

Resources 114 can also include or correspond to assets that can be transacted, such as compensation from the entity 112 (e.g., the corporation) to the account 174 (e.g., the employee), facilitating payments for overtime work and bonuses. For instance, an employee using a client device 120 can send a request 122 querying about their annual leave balance (e.g., the resource 114). In response, the data processing system 105 can provide an indication 152 including a detailed summary of the accrued, used, and remaining leave days associated with the account 174 (e.g., of the employee). For instance, an employee can use the client device 120 to send a request 122 seeking information about selling excess leave, and in response receive an indication 152 to see the asset or transactional (e.g., monetary) equivalent of what the account 174 would receive in exchange.

Resources 114 can include any values or parameters transacted by the automated processing functions 116. Resources 114 can include values associated with payroll transactions or human resources processing transactions, including values corresponding to monetary currencies, such as salary payments, bonuses, and deductions. Resources 114 can include other non-monetary items such as employee benefits (e.g., health, dental or vision insurance coverage, deductions, cost reimbursement amounts or limitations, retirement plan contributions (e.g., by the entity 112 on behalf of the account 174), or any other benefit or asset. Resources 114 can include digital assets like access permissions, software licenses, document or data access, equipment allocations, compliance metrics, performance evaluations, and training completions.

Various components of the data processing system 105 (e.g., the data collector 130, the prompts generator 136, the validator function 140, the output generator 150, the interface 154, the model trainer 160, or the data repository 168) can communicate with each other, operate together or in coordination with each other, or share each other's functionalities and data in order to implement or perform functions or operations. For instance, each subcomponent can be located on a separate server or a computing device, or on one or more subcomponents located on the same or a different server or cloud-based service. For example, each subcomponent of the data processing system 105 (e.g., 130, 136, 140, 150, 154, 160, or 168) can correspond to, or utilize one or more same or different processors 215 and can be operated using instructions from the same or different memory 225. In some aspects, one or more subcomponents of the data processing system 105 can operate or execute on the client device 120. For example, operations of the data processing system 105 can operate on or are performed by an application (e.g., software application, such as a web browser or an application for accessing and utilizing features of the system 100 via a user interface) operating on the client device 120.

The client device 120 can include any computing device that can be used by a client, individual, or a user (e.g., an employee) associated with one or more accounts 172 of an entity 112. A user can use the client device 120 for inquiring about the state or status (e.g., balance) of resources 114 via transactions processors 110 or using operations of a data processing system 105. The client device 120 can access, trigger, or utilize the functionalities associated with the data collector 130, the prompts generator 136, the validator function 140, the output generator 150, the model trainer 160, the data repository 168, or the user interface 154. The client device 120 can include, execute, or provide an interface 154 of the client device 120 to allow the users of the client device 120 to access and operate functionalities of the data processing system 105. The interface 154 on the client device 120 can include or be operated using an application allowing the user to draft, write, or generate requests 122 to send to the interface 154 of the data processing system 105.

The client device 120 can be or can include any computing device, such as a laptop, a desktop computer, a smartphone, or a tablet. A user of the client device 120 can operate, display, or otherwise execute an application (e.g., a web browser or one or more agents of the automated processing functions 116 or a data processing system 105) via the client device 120. The client device 120 can include, or be coupled with, storage or memory (e.g., 225). The client device 120 can be operated by a user associated with an entity 112to perform tasks of the organization. The client device 120 can execute one or more applications that can include platforms for performing various tasks associated with the entities 112, such as a low-code platform, no-code platform, software-as-a-service platform (SaaS), web application, web browser, desktop application, among others. In some aspects of the technical solutions described herein, the application is or includes an electronic transaction system for maintaining a data set to perform a transaction.

The transactions processors 110 can perform one or more functions relating to payroll for an entity 112. The entity 112 can include a corporation or an organization having one or more individuals, such as employees associated with one or more accounts 174. The entity 112 can be any grouping of people, such as an organization, a corporation, or an educational institution. The transactions processors 110 can maintain information or data of the entity 112. The information can include historical data 172 or any other data, such as name, address, social security number, salary, personally identifying information, demographic information, familial information, tax information, benefits information, or other data. The entity 112 can have, or be located within, one or more geographic locations that may have various regulations, laws, regulations, or guidelines according to which resource 114 bandwidth or availability can be determined.

The network 101 can be a wireless or wired connection for enabling the data processing system 105 to store, transmit, receive, or display information to identify, extract, and map a data set from a first type to a second type. The data processing system 105 can communicate with internal subcomponents (described herein), or external components (e.g., the transactions processors 110 or the client device 120, among others) via the network 101. The data processing system 105 can, for example, store data about the system in the data repository 168. The data processing system 105 can, for example, receive the data set 170 transmitted from the data repository 168. The network can include a hardwired connection (e.g., copper wire or fiber optics) or a wireless connection (e.g., wide area network (WAN), controller area network (CAN), local area network (LAN), or personal area network (PAN)). For example, the network 101 can include Wi-Fi, Bluetooth, BLE, or other communication protocols for transferring over networks as described herein.

The data processing system 105 can include a data repository 168. The data repository 168 is any memory, storage, or cache for storing information or data structures of the system 100. The data repository 168 can include a non-transitory computer-readable medium. The data repository 168 can allow a data set 170 to be accessed by any components of the system 100 for any operation discussed herein. The data repository 168 can include at least the data set 170 and models 162. The data set 170 can include various historical data 172, data on any accounts 174, and any constraints 178. The information in the data repository 168 can be stored in any kind of memory, such as a cloud or hard drive. The data repository 168 can include or utilize, for example, random access memory (RAM), dynamic random-access memory (DRAM), static random-access memory (SRAM), error correcting code (ECC), read only memory (ROM), programmable read only memory (PROM), or electrically erasable read only memory (EEPROM). The information or data structures (e.g., tables, lists, or spreadsheets) contained within the data repository 168 can be dynamic and change periodically (e.g., daily or every millisecond); via information from the server (e.g., through batch processing, real-time streaming, webhooks, scheduled jobs, incremental updates, database triggers, API requests, or version control systems, among others), via an input from a user (e.g., a user operating the client device 120), via information from the data repository 168, or the client device 120, transmitted through the network 101, via inputs from subcomponents of the data processing system 105 or via an external update to the system 100. For example, the models 162 within the data repository 168 change or are updated responsive to an indication from the model trainer 160 or new processes or outputs from APFs 116.

The data repository 168 can store, maintain, and provide access to the data set 170, the models 162, and the constraints 178. The data set 170, which can also be referred to as data 170, can include any information, parameters, or values corresponding to, or indicative of, utilization of resources 114 or any constraints 178 for resource utilization. The data set information, parameters, or values can be alpha-numeric, and include characters of text describing resource balances or utilization over time, as well as any constraints 178, such as limits on the resources 114 that can be assigned or provided for the account 174. The data set 170 can include strings such as "First Name", "Last Name", "Number of Vacation Days", "Personal Time-Off Days", "Paternity Leave Days Remaining", "Vacation Days to Carry Over to Next Year", or "Earnings" along with any associated values, such as "20" days, or "130,000" dollars or a string of characters for a name, street address or other information. The data set 170 can include auditory values, such as a sound or a vocal recording. The data set 170 can include colored or color coded-values. The data set 170 can include time-related values, such as a current time, elapsed time, number of personal leave days remaining, or clock-in time, among others. The data set 170 can include images. The values of the data set 170 can include any combination of values, including any alphanumeric strings. For example, a first value of the data set 170 includes an image and a string, and a second value of the data set 170 includes an auditory value. The values of the data set 170 can relate to each other. The data set 170 can be associated with a resource utilization of a location, role, or entity.

The data set 170 can include different attributes, such as file type, structure type, number of entities within the structure, nodes for the entities within the structure, or other such attributes. The data set 170 is included in, denoted by, or transmitted as an electronic file type. Examples of electronic file types include comma separated values (CSV), excel files (XLS or XLSM), or data interchange format (DIF), JavaScript Object Notation (JSON), among others. The data set 170 can be associated with or stored as a file type. The file determines or relates to data structures associated with the data set 170. In some technical solutions described herein, the data set 170 is encrypted by the data repository 168, such as by Advanced Encryption Standard (AES), Rivest-Shamir-Adleman (RSA), or another encryption standard. The data set 170 can be unencrypted by the transactions processors 110, or by another system enabled for access to the data set 170, such as the data processing system 105. In some aspects of the technical solutions described herein, one or more client devices request access to the data set 170 or request data set 170 itself from the transactions processors 110 via the data processing system 105 or through another computing system or the client device 120 directly. The data set 170 can be received from a client device 120 associated with the entity 112.

The data set 170 can include any historical data 172. Historical data 172 can include any information on utilization, bandwidth, or availability of resources 114. Historical data 172 can include information about prior use, transaction, transfer, decrease, or increase of the balance or sum of resources 114 available for an account. Historical data 172 can include information about any type of resource 114, including any prior use, utilization, accrual or increase, spending or decrease, or balance snapshots (e.g., at any historical point or time) of any resource 114. For instance, historical data 172 can include any information on leave entitlements, vacation days, sickness entitlements, annual, quarterly or monthly leaves, payment plans for parental leaves, forfeit or expiration of vacation days, data on buying or selling of leave balances (e.g., days of vacation), public holiday adjustments, overtime days or hours, compensation data, bonus data, retirement contribution data, data on stocks, bonds or shares associated with the account 174 (e.g., employee shares of the company), or any other information or resource associated with the account 174. Historical data 172 can include any information on availability, usage, accrual or spending of any resources 114, such as data about salary, wages, bonuses, overtime pay, commissions, benefits and perks (e.g., health insurance coverage, retirement contributions, stock options, or wellness program participation, among others), payroll deductions (e.g., federal, state, or local taxes, social security contributions, healthcare contributions (e.g., Medicare contributions), retirement plan contributions, among others), variable pay factors (e.g., performance-based bonuses, profit sharing distributions, or incentivized compensation, among others), or information on payroll frequency (e.g., monthly, bi-weekly, or weekly, among others), among others.

The data processing system 105 can include a data collector 130 that can be designed, constructed, and operational to receive, identify, synchronize, or obtain the data set 170 from the data repository 168. The data collector 130 includes any combination of hardware and software for collecting, storing, processing, entering, deleting, modifying, identifying, synchronizing, or receiving any data from the data set 170 from one or more APFs 116 of the transactions processor 110. The data collector 130 can receive data from APFs 116 processing transactions and generating data on accrual or consumption (e.g., decrease or spending) of resources 114 in connection with accounts 174. Data collector 130 can receive data based on a time interval or responsive to a condition or an event. The data collector 130 can make a request for data responsive to a condition, event, or other trigger. For example, the data collector 130 can request data on a periodic basis. The data collector can request data responsive a determination or a transaction processed by an APF 116 with respect to an account 174.

The data collector 130 can include the functionality to retrieve a data set 170, responsive to a request 122 from a remote device 120 for bandwidth of a resource 114 of an electronic account 147. The bandwidth can refer to or include, for example, availability of the requested resource 114. The retrieved data set 170 can correspond to the resource 114 and include or indicate utilization data (e.g., historical data 174) of the resource 114 and one or more constraints 178 related to the resource. For instance, the data set 170 can include information used to construct a data structure 134 that can indicate a context, one or more characteristics of the electronic account 174, and parameters for the resource 114. The data collector 130 can provide data for generating a prompt 138 for a model 162 trained with generative artificial intelligence that can include information or portions corresponding to constraints 178 for the resource and to the utilization data. The retrieved data set 170 can correspond to the authenticated information of the client account or the type of resource 114 for the account requested. The data set 170 can include information for determining whether the output 156 from the model satisfies one or more validation rules or thresholds, such as a regulation for a geographical area, an entity policy, historical usage data, or a constraint associated with a group of accounts. The data collector 130 can support associating record identifiers with stored record data structures, allow for retrieval of stored information or anomaly alerts in response to subsequent authenticated requests, and provide data for formatting indications or generating visualizations for display on the remote device.

Data collector 130 can be configured to implement a retrieval-augmented generation (RAG) of data. The data collector 130 can operate with the output generator 150 to utilize RAG technique during the generation of the indication 152. The RAG technique can include aspects of data retrieval and generation, such as first retrieving relevant information from a data repository or external sources based on the prompt and context provided, and then using the retrieved data to augment the generative process. For instance, the generative model 162 can produce an output informed by additional, contextually relevant information. By combining retrieval with generative capabilities, the data collector 130 can allow for the generated output to reflect the input prompt 138 and constraints 178, as well as incorporate up-to-date data to improve the reliability and accuracy of the resource bandwidth determinations. For example, suppose the data processing system 105 is determining leave entitlement. In that case, the RAG technique can be used to first retrieve current legal regulations on leave from a database and then generate an output that accurately reflects both the regulations and the user's specific context.

The data collector 130 can be configured to authenticate a user associated with the request 122 by utilizing authentication information provided by or associated with the client device 120. This authentication information can include, for example, user credentials, device identifiers, multi-factor authentication codes, biometric data, or digital certificates. Upon successfully verifying the identity of the user and confirming authorization to access the relevant resources, the data collector 130 can then retrieve the appropriate data set 170 from the data repository 168. This process ensures that only properly authenticated and authorized users can access sensitive or account-specific resource data. For example, when an employee attempts to query for their resource 114, the data collector 130 can validate the employee's login credentials and device token before retrieving and providing the data set 170 corresponding to the resource 114.

Account 174 can include any digital representation of data or actions that correspond to one or more individuals or users. Account 174 can be an electronic account of an employee of an entity 112, such as an employee of a corporation. Account 174 can serve as a digital identity through which, or using which, various transactions and interactions can be processed on behalf of the account holder, such as the employee. For instance, account 174 can allow for automated processing functions 116 to process transactions such as leave entitlements (e.g., vacation days, personal time off, annual leaves, sickness entitlements or sick days, timesheets data, overtime data), compensation computations (e.g., salary, benefits, retirement contributions, overtime, stock or options computations) or any other payroll, human resources, and other administration related transactions and processes.

Account 174 can include or store confidential data, such as confidential information of an individual employee, including a social security number, bank account information, salary details, and employment history. Account 174 can include access credentials like usernames and passwords, which facilitate secure login to the company's internal systems. Account 174 can include benefits enrollment information, performance review records, and time-off requests, resources accrual data (e.g., rate at which resources 114 are accrued or generated per month or per year), each of which can be integral to managing the employee's relationship with the entity 112 through the system 100.

Prompt 138 can include any structured input for a model 162 that can be generated by a prompts generator 136. Prompt 138 can include a structured alphanumeric string of characters arranged or structured to elicit specific output from a model 162 based on the data included within the prompt. The prompt 138 can include instructions, commands, descriptions, textual components, values or parameters that can be generated, designed, arranged or selected to cause a particular output or performance by the model 162. The prompt 138 can include information or data, formatting or code, that can configure the prompt to focus a generative AI model 162 into which the prompt is provided as input, to concentrate the processing of the model 162 within any combination of a particular field or space, a particular set of training data or issues, or according to a particular set of prompt constraints 178 (e.g., textual descriptions, code words, instructions, values or parameters).

The prompt 138 can be structured or organized to include multiple portions, such as a portion corresponding to constraints 178 on utilization of resources 114 (e.g., for a particular individual associated with a given account 174) and another portion corresponding to historic utilization of one or more resources 114 (e.g., associated with a given account 174). For example, in the context of determining resource bandwidth, the prompt 138 can include details about the maximum allowable leave days (e.g., the constraint 178) and an average or a total amount of leave days taken by employees over the past year (e.g., historical data 172 on utilization of resources). The resource bandwidth, can include, for example, the resource availability to a user of a client account. The prompt 138 can include specific instructions or rules about resource allocation or utilization, such as geographic limitations or department-specific policies, which can be combined with past patterns of resource usage. The prompt 138 can include a structured model input for calculating compensation, bonus or overtime availability, such as where one portion outlines the legal overtime limits (e.g., the constraint 178), and another portion provides data on typical overtime hours logged by employees during peak seasons (e.g., historic utilization). Using the various portions of the prompt 138, the prompt 138 can help the AI model 162 focus or concentrate on a particular set of information to generate accurate and context-aware responses regarding resource bandwidth, according to the constraints 178 and the historical data 172.

Constraint 178 can be any restriction, a limit or a rule for determinations involving resources 114. Constraint 178 can be a limitation on bandwidth or utilization of a resources 114. Constraint 178 can include a limitation on accrual or generation of a resource 114. Constraint 178 can include limits on the amount or value of resources 114 which an account 174 can accrue, consume or utilize, borrow (e.g., spend more than is accrued with intend to make up the difference), purchase or sell. Constraint 178 can include various forms of restrictions, such as numerical limits, legal limitations, and organizational policies that can guide or restrict how resources 114 can be allocated or used. Constraints 178 can include parameters, rules, or conditions based on factors such as time, geography (e.g., country, state, country or town rules or regulations), role, or entitlement, facilitating compliance with specific regulations and effective management of resources.

Constraints 178 can include legal constraints, such as constraints on resource 114 amounts, utilization, bandwidth or use (e.g., maximum allowable overtime hours or minimum amount of leave days, per labor laws or regulations). Constraints 178 can include or reflect entity 112 rules or policies, such as departmental budget limits for training programs, minimum number or percentage of employees that is to be available at a given time period. For example, in managing leave entitlements, a constraint 178 can specify the maximum number of sick leave days an employee is allowed annually, facilitating adherence to company policies. For example, constraints 178 related to resource allocation, such as geographic limitations restricting certain resources to specific regions, can be used to inform a prompt 138 and the model 162. Constraints 178 can include information or parameters for setting rules for the buy and sell of leave days, such as minimum leave balances for selling. Incorporating these constraints 178 into the prompt 138 enables the model 162 to generate accurate, context-aware responses that comply with predefined limitations.

Data structure generator 132 can include any combination of hardware and software for generating data structures 134. The data structure generator 132 can construct a data structure 134, based on the data set 170. The data structure 134 can be any format or arrangement of data (e.g., values, characters, fields, or key-value pairs) that can be used to generate a prompt 138. The data structure 134 can include information indicative of a context of the request, one or more characteristics of the electronic account, at least one parameter for the resource, and data associated with the electronic account, allowing for automated processing, model input generation, or validation within the distributed system. The data structure 134 can be constructed or generated to replace the request within the distributed system 100 during the processing of the output 156 (e.g., to determine and validate the bandwidth of the resource 114). The data structure 134 can indicate a context of the data structure and one or more characteristics of the electronic account.

The one or more characteristics of the data structure 134 can be indicative of a parameter for the resource and data associated with the electronic account. For example, the data structure 134 can include fields specifying an account identifier, a resource type indicator, a geographic region code, a current entitlement balance, a timestamp, an accrual or utilization metric, and one or more applicable constraints or validation rule references. In a particular implementation, the data structure 134 may take the form of a JSON object including entries such as entry "account_id": "E12345", indicating an account identifier, entry "resource_type": indicating a type of a resource 114 requested, entry "annual_leave", indicating the resource 114 inquired about, entry "region": "UK", indicating a geographical region for which to look up the regulations, entry "current_balance": 10 indicating a current balance of the resource 114, entry "utilization_rate": 1.2, indicating the rate of resource utilization 114, entry "constraint_id": indicating the identifier of a constraint or a limitation for the resource, and an entry "UKPolicy01", indicating a regulation to look up or process for the determination.

The data structure generator 132 can construct the data structure 134, based on at least on a type of the resource, a type of a data structure for the type of the resource. For instance, the data structure generator 132 can construct the data structure 134, based at least on a type of the resource and a type of data structure for that resource. For instance, if the resource is annual leave, the data structure 134 can be constructed to include fields such as employee identifier, resource type ("annual leave"), current leave balance, region code, applicable policy identifier, and requested leave days. If the resource is an expense reimbursement, the data structure 134 can include entries such as account identifier, expense category, total amount submitted, project code, reporting period, location, and applicable expense cap or policy reference.

Prompt generator 136, also referred to as prompts generator 136, can include any combination of hardware and software for generating prompts 138. Prompt generator 136 can include any tool (e.g., a computer code function) for creating structured input queries for managing outputs 156 of the model 162 (e.g., determined output parameters or values). The prompt generator 136 can be configured to generate, based on the data structure 134, a prompt 138. The generated prompt 138 can include a first portion corresponding to the constraint for the parameter of the resource and a second portion corresponding to the utilization data of the resource according to geographical data. The parameter of the resource can be a value or attribute specific to the resource 114, such as a requested number of leave days, a payroll amount, or an expense claim total. The constraint for the parameter can be a limitation, an acceptable range of values, a rule, or a policy governing how much of the resource can be allocated, used, or approved, for example a maximum annual leave allowance by regulation, a payroll ceiling per role, or a local policy's monthly expense cap. Utilization data can include historical data 172 or real-time usage metrics contextualized by location, such as regional usage patterns, balances accrued under local regulations, or prior consumption in a specific jurisdiction.

For example, if the requested resource 114 is annual leave, the parameter can be the number of leave days requested, the constraint might be a legal maximum of 20 days per year in a specific country, and the utilization data could indicate that the employee in that region has used 12 days so far that year. The prompt 138 can combine these data to state in the body of the prompt a text for the model 162 stating if an employee in this particular region can be approved for five more leave days, given a used balance of 12 days and a regional limit of 20 days. In another example, for an expense resource, the parameter could be the reimbursement amount submitted, the constraint could be a $1,000 monthly cap for a particular office location, and the utilization data could reflect month-to-date spending in that location, resulting in a prompt 138 indicating if the review $300 expense claim for a given account 174 in a given geographical region, provided that $750 was already reimbursed out of the total $1,000 limit. While these examples illustrates examples where limitations arise out of a geographical area, it is understood that limitations or constraints can emerge out of different grouping of electronic accounts 174 (e.g., based on a specific department, employee title or any other grouping).

Prompt generator 136 can include a software application or system designed to automatically generate prompts 138 for various purposes, such as querying models or retrieving information. Prompt generator 136 can generate prompts 138 based on information or data from requests 122 (e.g., data from data structures 134 generated based on the text of the request 122 or account 174 in connection with which the request 122 was made). Prompt generator 136 can include functionalities for defining parameters, constraints, and specific instructions tailored to the model 162 or system it interacts with. Prompt generator 136 can operate by taking input criteria and processing it through predefined templates or algorithms to produce a format and data configured or tailored for the model 162 to manage or control the focus, concentration or scope of the output of the model 162.

For example, a prompt generator 136 can create prompts 138 for a resource management model by combining constraints 178, such as allowable leave days with historical data 172 on usage of leave days by accounts 174 of the same entity 112, or the same group of employees within the same entity 112 (e.g., a group of factory manufacturing shift employees of a corporation). For instance, the prompt generator 136 can generate prompts 138 for an AI model 162 to assess overtime availability, using parameters such as legal limits for the region or area associated with the account 174 (e.g., the constraint 178 of the prompt) and historical overtime hours (e.g., amount of overtime hours claimed in a time sheet associated with the account 174). The prompt generator 136 can include data structures with instructions for generating prompts 138 customized for each of a plurality of models 162, such as by having a different range of formats and parameters to include in the prompts 138 for different models 162. By automating the creation of prompts 138, the prompt generator 136 can streamline the process and ensure consistency in the input provided to various systems or models 162.

Model selector 180 can include any combination of hardware and software for identifying or selecting models 162 to utilize for determinations. Model selector 180 can be a system or application designed to evaluate and choose from a range of available models 162. The model selector 180 can select or identify a model 162 that is trained with generative artificial intelligence to determine resource bandwidth, based on the prompt 138. The resource bandwidth can include, for example, a resource's availability. For instance the model selector 180 can identify a generative machine learning or artificial intelligence model, based on the one or more characteristics and according to the context indicated by the data structure 134. The model selector 180 can identify or select models 162 based on specific parameters, criteria, such as the account 174 or entity 112 in connection with which a request 122 was made, or information in the request 122.

The model selector 180 can analyze input data (e.g., request 122 or prompt 138) and determine the most suitable model 162 for the given request 122. For instance, the model selector 180 can select, based on the type of the data structure, a type of the prompt 138 from a plurality of types of prompts. For instance, the model selector 180 can determine that the data structure 134 is a type of a data structure for a leave request, and in response to this determination, the model selector can select a type of the prompt 138 (e.g., or a template for the prompt) for the determined type of data structure 134.

Model selector 180 can include functionalities such as filtering models based on their capabilities, comparing performance across different models, and applying selection algorithms to verify that the optimal model is selected or identified. For example, the model selector 180 can evaluate predictive models based on their training data set, regional configuration (e.g., dataset involving regulations of particular countries, or areas), industry configuration (e.g., entities 112 of a particular industry), and select the most effective model 162 for generating an indication 152. The model selector 180 can select a natural language processing model best suited for understanding a complex query of a request 122, based on its performance metrics and training data for that given model 162.

Output generator 150 can include any combination of hardware and software for generating indications 152 on the bandwidth or availability of a resource 114. The output generator 150 can utilize or call any models 162 and prompts 138 to generate the indications 152 as outputs from the models 162. The output generator 150 can input the prompt 138 into the model 162 to generate an output 156 that indicates the availability of the resource. The output generator 150 can utilize any models 162 to generate indications 152 by inputting the prompts 138 into the models 162, as selected by the model selector 180. The output generator 150 can operate by engaging models 162 (e.g., predictive algorithms or AI-based systems) using prompts 138 that define the conditions using historical data 172 and constraints 178 relevant to resource availability. Upon generating the output 156, the output generator 150 can generate the indication 152 and transmit the indication 152 for display via the interface 154, and to the remote client device 120 to display the indication 152 on the display of the client device 120, in response to the request 122.

The output generator 150 can also include features for aggregating data, applying predefined parameters of historical data 172 and constraints associated with accounts 174, and processing or interpreting results to generate outputs 156 or indications 152. For example, in a leave management scenario, an output generator 150 can use a prompt 138 indicating leave balances in terms of days or hours associated with an account 174 along with constraints 178 on leave entitlements for the type of account that includes the same account 174, in order to produce indications 152 of available leave days for the account 174. For instance, the output generator 150 can generate an indication 152 on resource availability output 156 by combining historical utilization data 172 with predictive models to forecast future resources 114 that will be available to the account 174, given a trend or rate of accrual and consumption of the resources 114.

The output generator 150 can be configured to coordinate with the data collector 130 to identify historical data corresponding to the resource 114. The historical data can be indicative of prior utilization of the resource 114 associated with the electronic account 147. Upon generating an output 156 using the selected model 162 and prompt 138, the output generator 150 can retrieve the relevant historical usage metrics for the resource 114 from the data set 170 available through data collector 130. The output generator 150 can then compare compares the output 156, including a parameter value such as a requested resource amount or predicted availability, to the historical data. The output generator 150 can, via comparison, determine whether the output deviates from the historical utilization pattern by more than a defined deviation threshold (which may be a configurable value or calculated statistically). If the output 156 is found to deviate by more than the deviation threshold, the output generator 150 can generate an anomaly alert in the form of an indication 152. This anomaly alert can include the parameter that triggered the alert, the amount of the deviation, the timestamp, and the affected electronic account 147. The output generator 150 can store the anomaly alert in the data repository 168, associating the alert with the electronic account 174 so that it may be subsequently accessed for audit, compliance, or notification purposes. For example, if an employee associated with account 174 can request an unusually high number of leave days compared to historical averages for that region, resource type or the user, and the output generator 150 can generate and log this anomaly alert indicating the outlier event, which may then be reviewed by administrators or used to trigger additional workflow actions.

Validator function 140 can include any combination of hardware and software for validating the indication 152. The validator function 140 can include any computer code or function for validating any outputs 156 or indications 152 output from any models 162 based on a comparison with a threshold 142. For instance, the validator function 140 can validate the output 156 generated by the output generator 150 based on a comparison with a threshold. The validator function 140 can be designed to determine, assess, or verify if the generated output indication 152 (e.g., from the output generator 150 or its model 162) meets a predefined criterion or standard by comparing the parameters or values in the indication 152 with any number of thresholds 142. The threshold 142 can include any limits, range, or standards used to compare the outputs from the indications 152 and verify or validate their accuracy.

For example, the validator function 140 can be configured to receive, from the model 162, a value for the parameter of the resource 114, such as a recommended approval amount, a predicted availability, or a proposed entitlement. The validator function 140 can then validate the value of the output 156 by comparing it with the corresponding constraint 178, which may represent a limited range of values, a policy-imposed limit, a statutory cap, or an organizational guideline specific to the resource type or context. The validator function 140 can identify one or more validation rules to apply to the output. Each rule can correspond to at least one factor such as a regulation applicable to a geographical area, a policy maintained by the entity associated with the electronic account 174, or a project-specific limitation relevant to the resource 114. The output 156 can be evaluated against each applicable validation rule. Suppose the validator function 140 determines that at least one rule is not satisfied (e.g., when the output 156 exceeds a maximum value allowed by a regulation of a geographical area or a regulation of the entity for a particular department to which the account 174 belongs, or exceeds a project's allocated budget). In that case, the validator function 140 can generate an indication 152, such as an alert or notification, that the resource 114 is not available under the current request or conditions. For example, if the model 162 outputs a leave approval value for an employee in a particular geographical region that would exceed a statutory maximum annual leave, the validator function 140 can withhold approval and issue a notification explaining the constraint violation. For example, if a requested expense amount surpasses the allowable project allocation, the validator function 140 can generate an indication or alert to the user or administrator identifying the specific rule or constraint that was not met, enabling targeted compliance and transparency in the system workflow.

The validator function 140 can be configured to validate the output 156 by performing a comparison that takes into account the type of the output 156 being generated. For each type of output 156, such as a leave approval, a bonus allocation, or an equipment request, the validator function 140 can determine and apply a specific threshold that is appropriate for that type of output 156. The threshold can be defined based on a constraint that can be specified by a regulation or policy associated with a particular geographical area or set of rules for the electronic account 174. When validating the output, the validator function 140 can first identify the output type and then select or compute the corresponding threshold value. The output can be compared to this threshold to check for compliance with applicable rules. For example, in a scenario where the output is a proposed annual bonus amount for an employee, and a labor regulation applicable to the employee's region sets a maximum allowable percentage of base salary for bonuses, the validator function 140 can retrieve the applicable bonus cap and compare the computed bonus output to this cap. If the bonus exceeds the threshold, the validator function 140 can generate an alert or adjust the output accordingly.

The validator function 140 can be configured to compare the parameter of the output 156 against any number of thresholds to validate the output 156. The thresholds can include, for example, a limitation for the resource 114 established by an entity associated with the electronic account 174, a limit derived from the historical utilization data of the resource, or a constraint imposed on the resource due to membership in a particular group of electronic accounts, such as a department, project team, or organizational unit. For instance, when processing a request to allocate training credits, the validator function 140 may check that the credits do not exceed a company-wide maximum established for employees per calendar year, or for employees of a particular rank or type. The validator function 140 may check for a utilization-based restriction, such as prohibiting new credits when outstanding or unused credits from prior periods remain.

The validator function 140 can determine the validity of the indication 152 by comparing any number of parameters or values from the indication 152 with any number of thresholds 142. The validator function 140 can verify the validity based on the validation of individual values or parameters with respect to individual thresholds 142. For instance, the validator function 140 can verify one or more parameters or values from the indication 152 with one or more thresholds 142. In such a scenario, the validator function 140 can determine that the indication 152 is validated in response to each of the one or more thresholds 142 being satisfied. If a single threshold 142 is not satisfied, in response to such an event, the validator function 140 can indicate the failure to validate and trigger, request, or prompt the prompts generator 136 to generate a new, updated prompt 138. The new or updated prompt 138 can include a correction or an adjustment determined from the feedback provided by the validator function 140, and the updated prompt 138 can be used to generate a new indication 152 (e.g., via the output generator 150).

The validator function 140 can verify the validity of the indication 152 based on a collective performance of the parameters and values of the indication 152 with respect to a plurality of thresholds 142. For instance, in the event that each of the plurality of thresholds 142 is satisfied by the corresponding parameters or values of the indication 152, the validator function 140 can determine if the combined performance of each of the parameters and values of the indication 152 satisfies the thresholds 142 collectively. The plurality of thresholds can include, for example, two or more of: a limitation for the resource from a regulation of a geographical region associated with the electronic account, a limitation for the resource established by an entity of the electronic account, a limitation for the resource based on the utilization data, or a constraint on the resource associated with a group of electronic accounts comprising the electronic account. For instance, the validator function 140 can determine that a plurality of thresholds 142 were barely satisfied (e.g., within 5% or 10% of the threshold value). Then, when combining the threshold determinations for various thresholds 142 to determine a collective performance, the validator function 140 can determine that even though each of the thresholds 142 were satisfied, they were collectively satisfied within less than a threshold combined tolerance, which can be a range, such as 5% or 10% range from the average of threshold values. In response to determining that the plurality of thresholds was satisfied within less than a threshold combined tolerance (e.g., they were on average barely satisfied by less than a tolerance range), the validator function 140 can determine that the indication 152 is not validated. In response to such an indication, the validator function 140 can provide a feedback message with information on the determination to inform the prompt generator 136 on how to adjust the prompt 138 to trigger the creation of an updated indication 152.

The validator function 140 can facilitate the storage of at least one of the data set 170, the constructed data structure 134, and the output 156 in a data repository 168 as a record data structure associated with the electronic account 174. The record data structure can be a data structure stored in a data repository upon successful validation of a requested resource. For instance, upon completion of the validation process, the validator function 140 can associate a unique record identifier with the stored record data structure, allowing for precise tracking and retrieval of the resource request in the future. The system 100 can maintain an auditable history of resource availability determinations and validation events. In response to a subsequent request that includes or references the record identifier, the validator function 140 can retrieve the corresponding record data structure from the data repository 168, providing access to prior validation and output information. For example, suppose an employee, manager, or auditing system is later to review the decision for a specific leave request or expense approval. In that case, the validator function 140 can use the record identifier to retrieve the exact data structure, showing the original input data, computed output, applied validation rules, and the decision outcome, allowing for traceability and compliance.

The validator function 140 can be configured to generate, in response to successful validation of the output 156, a control instruction that includes at least one of a resource identifier, an account identifier, or a validated parameter of the output corresponding to the resource 114. The validator function 140 can then transmit this control instruction via an application programming interface (API) to a remote system associated with the electronic account 174, to cause the remote system (e.g., 110) to execute an automated operation for processing the resource 114. For example, suppose the validator function 140 determines that a leave request has been approved according to all applicable constraints and policies. In that case, it can generate a control instruction containing the employee identifier, the type of leave, and the approved number of days, and send this instruction to a human resources management system at an APF 116 to update the employee's leave balance. For example, the control instruction can be sent to an APF 116 of a payroll processing platform to initiate a payroll disbursement or to an expense management system to record an approved expense reimbursement for the electronic account 174. Upon execution of the automated operation, the remote system can send a confirmation message back to the validator function 140, indicating that the requested action, such as updating a leave balance, initiating a payroll transaction, recording an expense, or modifying an entitlement record, was successfully completed. This closed-loop process enables all validated resource actions to be accurately reflected within the associated enterprise systems.

When a validator function 140 determines that an output 156 or indication 152 is not validated (e.g., the indication 152 does not satisfy one or more thresholds 142), the validator function 140 can provide information or data to the prompts generator 136 with feedback on the reasons for the indication 152 failing validation. The information can include thresholds 142 not satisfied or data that caused the thresholds 142 not to be satisfied. The prompts generator 136 can utilize this feedback or data to generate a new prompt 138 for an updated indication 152. The output generator 150 utilizes the updated prompt 138 to input into a model 162 (e.g., as selected based on the updated prompt 138) to generate an updated indication 152. Upon a successful validation of the output 156, the validator function 140 can transmit for display, via the interface of the remote device, a visualization comprising one of a chart or a graph of the output that indicates a remaining balance of the resource inquired in the request.

The validator function 140 can generate specific thresholds 142 in response to information about changes or updates to various regional (e.g., state, country, county, or city) regulations or laws, or changes or updates to policies or rules of an entity 112. For instance, the validator function 140 can generate thresholds 142 responsive to, or based on, changes to new regulations or laws (e.g., regulation or law updates) impacting how resources 114 are accrued, utilized, or otherwise managed. For instance, the validator function 140 can generate thresholds 142 responsive to, or based on, changes to new entity determinations or rules impacting how resources 114 are accrued, utilized or otherwise managed. Such thresholds 142 can be utilized to validate system outputs that may be provided based on models 162 that are trained using data not including the new regulations or law updates or new entity rules. The validator function 140 can generate thresholds 142 to supplement or correct determinations made based on constraints 178 or historical data 172 that may be impacted or affected by the new regulations, rules, policy updates, or changes.

Threshold 142 can include any limit, range, or standard used to compare or verify at least a portion (e.g., a parameter or a value) of an indication 152 to determine the validity or accuracy of the indication 152. Thresholds 142 can include any numerical limits, performance benchmarks, or any values or parameters corresponding to any regulatory compliance standards. Threshold 142 can include limits, performance benchmarks, or policy benchmarks of a particular entity 112 or a portion of an entity, such as a department associated with a group of accounts 174. Thresholds 142 can include values or parameters for checking, validating, or verifying any aspect of the indication 152, including a number of resources 114 granted or allowed to be used or consumed.

Threshold 142 can refer to a predefined limit or standard used to evaluate and validate outputs or decisions. Threshold 142 can be a benchmark or criterion against which data or results are compared to determine their validity or acceptability. Threshold 142 can include numerical limits, performance criteria, regulatory limitations, or other measurable standards that guide decision-making processes. For example, in a leave management system, a threshold 142 can include a maximum number of leave days an employee can accrue before they start losing unused days. Threshold 142 can be an asset or a financial threshold used to ensure that compensation or vendor purchase approval determinations stay within budgetary constraints or do not exceed predefined spending limits. Thresholds 142 can also include performance benchmarks, such as accuracy rates for predictive models, where outputs are validated against these benchmarks to ensure reliability. For instance, a model 162 can provide a performance benchmark for a given determination of indication 152. A validator function 140 can validate or invalidate the determination based on a comparison of the performance benchmark of the model 162 with a threshold 142 for that performance benchmark (e.g., 99% threshold). For instance, regulatory thresholds 142 can include parameters or values for compliance with legal limits, such as ensuring that overtime hours do not surpass legally mandated maximums. By setting and applying these thresholds, organizations can maintain control, ensure compliance, and make informed decisions based on clearly defined criteria.

For instance, in a leave management system or process, a validator function 140 can compare or use a parameter of an indication 152 corresponding to an available leave days against a threshold 142 corresponding to a maximum number of days available for approval. The threshold 142 can be a threshold corresponding to a policy or a guideline of an entity 112 for a group of accounts 174 corresponding to a particular department or a group of accounts 174 of employees that have a limitation on this type of a resource 114 over a particular time period (e.g., a month of July). For instance, a threshold 142 can include a total number or a total percentage of employees (e.g., accounts 174) that can take a vacation during a particular month, such as a threshold of 50%. For example, a threshold 142 of 50% can preclude, flag, bar or invalidate an indication 152 indicating that a particular account 174 can take 15 days of vacation (e.g., even if the employee has 15 days of vacation available), based on a determination that granting such 15 days of vacation will result in breaching 50% of vacation limit for that department (e.g., group of accounts 174). In other words, the threshold 142 can apply as a bar or a limitation for a group of accounts 174 associated with the account 174, when the indication 152 indicates an approval based on the resources 114, historical data 172 and constraints 178 of an account 174, but a threshold 142 addresses a group of accounts 174 including the account 174 for the given resource 114.

For instance, in an example of a compensation calculation, the validator function 140 can compare the generated values or figures of compensation from the indication 152 with budgetary limits or predetermined asset (e.g., financial) thresholds 142 for either that particular account 174 or a group of accounts (e.g., a department). The validator function 140 can determine that, even though an indication 152 satisfies the constraints 178 (e.g., hourly rate) and historical data 172 (e.g., number of hours employee of the account intends to work), the threshold 142 can bar further asset distribution to that account 174 or a group of accounts 174. This can be based on a policy or a rule associated with the account 174 or a group of accounts 174 (e.g., a department) that can have a cap on the total amount of assets to consume (e.g., a total budget for the group or department). For instance, the validator function 140 can similarly use threshold 142 to validate compliance with legal limits, such as ensuring that overtime hours do not exceed legal maximums, or that a number of leave days do not exceed a particular set maximum for the entity 112. By incorporating these various thresholds 142, the validator function 140 can provide a quality control to improve the accuracy and reliability of the generated indications 152.

The data collector 130 can receive or retrieve more than one data set 170 from a first source, such as the transactions processors 110. For example, the data collector 130 can receive a first data set from the transactions processors 110 at a first time and a second data set from the transactions processors 110 at a second time. The data collector 130 can receive, retrieve, or aggregate the data set 170 periodically (e.g., every minute, every week) responsive to a change or modification of the data set 170 by the source (e.g., the payroll processing system of the transactions processor 110), from a push or request from the source to collect the data set 170, by a request (e.g., as implemented by a client device 120), or by a push or a query from a subcomponent of the data processing system 105 (e.g., by the model trainer 160 instructing the data collector 130 to retrieve the data set 170). The data set 170 can be associated with a time stamp. The data collector 130 can receive the data as a data stream or real-time data feed.

Due to the large amount of data that can be collected, the data processing system 105 can use predictive analytics models (e.g., models 162) to improve the performance of data collecting or downstream processing by filtering out irrelevant data, or otherwise focusing the system on useful data. For instance, data processing system 105 can employ predictive analytics models trained on historical compensation data to forecast the quality of incoming data elements. These models can predict the accuracy and reliability of employee compensation information, such as salaries, benefits, and payroll deductions, based on past patterns and anomalies. The data processing system 105 can prioritize data with higher predicted quality scores for compensation planning to ensure accurate and fair remuneration practices. The data collector 130 can synchronize one or more subcomponents of the data set 170 using application programming interface (API) integration, Extract, Transform Load (ETL) Processes, or data replication and sync tools. The data collector 130 can perform pre-processing or data cleaning techniques to modify, clean, or otherwise prepare the data to improve the performance of other components of the data processing system 105 that utilize the data.

Interface 154 can include any combination of hardware and software for interfacing between the data processing system 105, client devices 120, and transactions processors 110. Interface 154 can include hardware and software components for exchanging network data packets via network 101. Interface 154 can include applications with graphical user interfaces for allowing users of client devices 120 to gain access and utilize or operate any functionalities of the data processing system 105 or transactions processors 110. Interface 154 can include a chatbot interface for receiving requests 122 (e.g., inquiries) and automatically providing responses (e.g., validated indications 152) to the requests 122, via the chatbot interface. Interface 154 can be configured to transmit messages, requests, or responses, such as indications 152 generated by the data processing system 105 and send (e.g., via the network 101) to the client device 120. Interface 154 can be configured to make transmissions, including API calls or requests for performing operations by APFs 116 to the transactions processor 110, and receive any responses (e.g., any information associated with historical data 172, accounts 174, or constraints 178) from the transactions processor 110.

The interface 154 and the output generator 150 can trigger, initiate, utilize, or operate a graphical user interface (e.g., on a local or a remote device) on which to display information. For instance, the interface 154 can operate along with the output generator 150 to generate various dashboards for presentation or rendering via a graphical user interface by a client device 120. The output generator 150 can allow the client device 120 to trigger, operate, or utilize any functionalities of the data processing system 105 or transactions processor 110 via a graphical user interface of the interface 154. The output generator 150 can utilize the interface 154 to illustrate any aspect or data of indication 152. For instance, the output generator 150 can plot or generate a graph of one or more resources 114 over time, including any actions of consumption of resources 114 or accrual of resources 114. A graphical user interface can be utilized to allow a logged-in user associated with the account 174 to view information about the account 174, manage or request utilization of resources 114, send requests 122 to utilize or consume resources, and seek a balance of the resources 114 that are available.

In some aspects, the models 162 (hereinafter referred to as model(s) 162, machine learning model(s) 162, generative artificial intelligence models 162 or trained model(s) 162) can include one or more neural networks, decision-making models, linear regression models, natural language models, random forests, classification models, reinforcement learning models, clustering models, neighbor models, decision trees, probabilistic models, classifier models, or other such models. For example, the models 162 include natural language processing (e.g., support vector machine (SVM), Bag of Words, Counter Vector, Word2Vec, k-nearest neighbors (KNN) classification, long short erm memory (LSTM)), object detection and image identification models (e.g., mask region-based convolutional neural network (R-CNN), CNN, single shot detector (SSD), deep learning CNN with Modified National Institute of Standards and Technology (MNIST), RNN based long short term memory (LSTM), Hidden Markov Models, You Only Look Once (YOLO), LayoutLM) (classification ad clustering models (e.g., random forest, XGBBoost, k-means clustering, DBScan, isolation forests, segmented regression, sum of subsets 0/1 Knapsack, Backtracking, Time series, transferable contextual bandit) or other models such as named entity recognition, term frequency-inverse document frequency (TF-IDF), stochastic gradient descent, Naive Bayes Classifier, cosine similarity, multi-layer perceptron, sentence transformer, data parser, conditional random field model, Bidirectional Encoder Representations from Transformers (BERT), among others.

The models 162 used by the output generator 150 can be trained on historical data 172 collected with respect to various accounts 174. Models 162 can be trained from historical data 172 of a plurality of accounts 174 of a plurality of entities 112, as well as a plurality of constraints 178 that can be applied for those accounts 174. The models 162 can be trained to determine availability of resources 114, given the constraints 178 and historical data 172 of the account 174 or entity 112. The models 162 can be trained to predict the future balance of resources 114 at a given point, given the accrual rate or the average consumption rate of the resources 114. The models 162 can make the determination based on thresholds 142 for the given accounts.

The models 162 can include generative AI models, which can include any machine learning systems configured to create new content, such as text, images, or audio, by learning patterns from the data set 170. The generative AI models 162 can be trained using techniques such as supervised learning, unsupervised learning, and reinforcement learning. Generative AI models 162 can utilize data set 170 to create logical inferences between various complex structures in the data set 170 to generate coherent outputs per prompts 138 input into the models. The generative AI models 162 can be utilized to determine resource availability by processing portions of prompts 138 with constraints 178 or historical data 172 and generating context-aware responses based on the training from the data set 170.

The generative AI models 162 can include any machine learning (ML) or artificial intelligence (AI) model designed to generate content or new content, such as text, images, or code, by learning patterns and structures from existing data. The generative AI model 162 can be any model, a computational system, or an algorithm that can learn patterns from data (e.g., chunks of data from various input documents, computer code, templates, forms, etc.) and make predictions or perform tasks without being explicitly programmed to perform such tasks. The generative AI model 162 can refer to or include a large language model. The generative AI model 162 can be trained using a dataset of documents (e.g., text, images, videos, audio, or other data). The generative AI model 162 can be designed to understand and extract relevant information from the dataset. The generative AI model 162 can leverage natural language processing techniques and pattern recognition to comprehend the context and intent of the prompt 138, match it with relevant information in the training data, and generate a response that addresses the query.

The generative AI model 162 can be built using deep learning techniques, such as neural networks, and can be trained on large amounts of data. The generative AI model 162 can be designed, constructed or include a transformer architecture with one or more of a self-attention mechanism (e.g., allowing the model to weigh the importance of different words or tokens in a sentence when encoding a word at a particular position), positional encoding, encoder and decoder (multiple layers containing multi-head self-attention mechanisms and feedforward neural networks). For example, each layer in the encoder and decoder can include a fully connected feed-forward network, applied independently to each position. The data processing system 105 can apply layer normalization to the output of the attention and feed-forward sub-layers to stabilize and improve the speed with which the generative AI model 162 is trained. The data processing system 105 can leverage any residual connections to facilitate preserving gradients during backpropagation, thereby aiding in the training of the deep networks. Transformer architecture can include, for example, a generative pre-trained transformer, a bidirectional encoder representations from transformers, transformer-XL (e.g., using recurrence to capture longer-term dependencies beyond a fixed-length context window), text-to-text transfer transformer,

The generative AI model 162 can be trained (e.g., by a model training function) using any text-based dataset by converting the text data from the input dataset documents into numerical representations (e.g., embeddings) of the chunks of those documents. These embeddings can capture the semantic meaning of words, paragraphs, pages, or sentences, depending on the size and type of chunks of dataset documents are parsed into. Embeddings can be used to represent and organize the dataset documents within a high-dimensional space (e.g., embedding space), where similar documents or concepts are located closer together. Embedding space can include a multidimensional vector space where each data point is represented by an embedding.

Through training, the generative AI model 162 can learn, or adjust its understanding of mapping the embeddings to particular issues (e.g., prompts related to resource availability or constraints concerning the resources), by adjusting its internal parameters. Internal parameters can include numerical values of the generative AI model 162 that the model learns and adjusts during training to optimize its performance and make more accurate predictions. Such training can include iteratively presenting the various data chunks or documents of the dataset (e.g., their chunks, embeddings) to the generative AI model 162, comparing its predictions with the known correct answers, and updating the model's parameters to minimize the prediction errors. By learning from the embeddings of the dataset data chunks, the generative AI model 162 can gain the ability to generalize its knowledge and make accurate predictions or provide relevant insights when presented with prompts 138.

The generative AI model 162 can include any ML or AI model or a system that can learn from a dataset to generate new content (e.g., text or images) that resembles a distribution of the training dataset. A distribution of a dataset can include an underlying probability distribution representing the patterns and characteristics of the data used to train a generative AI model 162. For example, a training data distribution can represent statistical properties of a text data (e.g., text corpus), such as the frequency of words, the co-occurrence of terms, and the overall structure of the language used in the training dataset. The generative AI model 162 can include the functionality to utilize such a probability distribution of patterns and characteristics to generate new responses (e.g., predictions) that were not present in the dataset. The generative AI model 162 can generate, responsive to the prompt 138, output indications 152 that can include parameters and values associated with the status, balance, or availability of the resources 114, along with any descriptions of the constraints or resources.

The data processing system 105 includes a model trainer 160 designed, constructed, and operational to train, identify, or operate the models 162. The model trainer 160 can train the models 162 by receiving one or more inputs from client devices 120, or the data set 170, among others. The model trainer 160 can identify models 162 for use by other subcomponents of the data processing system 105. The model trainer 160 can store or modify the models 162 in the data repository 168 using any new or added data into the data set 170 (e.g., via the process of retraining).

To train the models 162, the model trainer 160 can use one or more of the data set 170, or one or more parameters correlated to the data set 170. The model trainer 160 can use the training data set constructed from historical data 172 acquired from or associated with accounts 174 of any number of one or more entities 112. The model trainer 160 can use data from one or more client devices 120, transactions processors 110, or outputs from APFs 116. For example, the model trainer 160 trains the models 162 using the data set 170, such that it feeds, supplements, or provides the input training data set as inputs to the models 162 to train the models 162. The inputs can include an input training data set that is based on known outputs of the input training data set. The input training data set can be annotated by a user of a client device 120 or otherwise have known outputs or incomes. By providing the input training data set with the inputs and known outputs to the models 162, the model trainer 160 generates the trained models 162. For example, the input training data set includes a large variety of data types, criteria, or parameters, among others. The input training data set can be marked to distinguish each attribute of the input training data set. The model trainer 160 can generate the trained models 162 by providing the inputs to create the known outputs. This process can be iterative and can utilize any of the inputs or machine learning models described herein.

The model trainer 160 can validate the trained models 162 using a test data set. With generation of the models 162, the model trainer 160 can provide inputs based on the test data set to determine the validity of each of the models 162. The validity of each of the models 162 can relate to an error. The error can be the difference between the known outcomes of the test data set and actual outcomes when inputs based on the test data set are provided to the models 162. For example, the test data set includes a known input and outcome. Upon providing the known input to a model 162 trained to accept that input, the model 162 provides the known outcome, or can provide a different, erroneous outcome. This comparison between the known outcome and the model-generated outcome can be repeated for various inputs of a model 162 to generate an overall error score or rate. The error score or rate can relate to the validity of the model 162. If the error score or rate for the model 162 exceeds a threshold error, the model 162 can be considered invalid or erroneous. If the error score or rate for the model 162 is at or below the threshold error, the model 162 can be considered valid. In this manner, each model 162 can be validated by the model trainer 160.

The model trainer 160 can retrain the models 162 responsive to the error score of one of the models 162 being above a threshold error or based on new data. In some cases, the model trainer 160 can determine that the error score of the models 162 is above the threshold error (e.g., invalid) responsive to the generation of the models 162 by the model trainer 160. For example, the model trainer 160 determines that a model 162 of the models is invalid based on an error score of the model 162 exceeding an error threshold for the model 162 upon generation. The model trainer 160 determines that the models 162 are invalid prior to storing the models 162 in the data repository 168. The model trainer 160 can check the models 162 periodically to determine the validity of the models 162. For example, model 162, which was once valid, can drift, or become less valid or have a higher error score over time. The model trainer 160 checks the validity of the models 162 stored in the data repository 168, the models 162 generated by the model trainer 160, or the models of the system 100.

Upon the model trainer 160 determining that one or more models 162 are invalid (e.g., the error score is above the threshold error), the model trainer 160 can instruct the data collector 130 to aggregate, collect, retrieve, or generate a second training data set. With receipt of the second training data set, the model trainer 160 can retrain one or more models 162. The model trainer 160 can divide the second training data set into subsets, such as a second training input data, and a second test data. The model trainer 160 can combine the training data set and the second training data set. For example, the model trainer 160 incorporates, combines, or adds the second training data to the training data. With the aggregation of the second training data set, the model trainer 160 can provide further inputs and known outcomes to further train the models 162. The model trainer 160 can retrain the models 162 with an error score above the threshold error, all of the models 162, or selected models 162. The model trainer 160 can retrain the models 162 or a subset of the models 162 subsequent to the elapse of a period of time. For example, the model trainer 160 retrains a model 162 every week, every year, or upon its error score not satisfying (e.g., exceeding) the threshold error for the model 162.

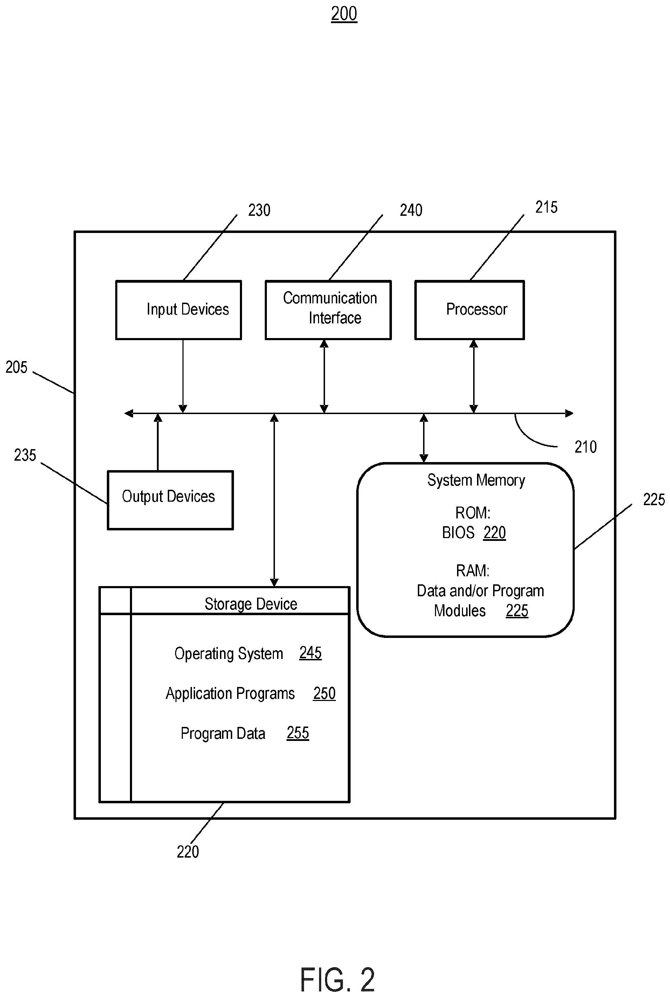

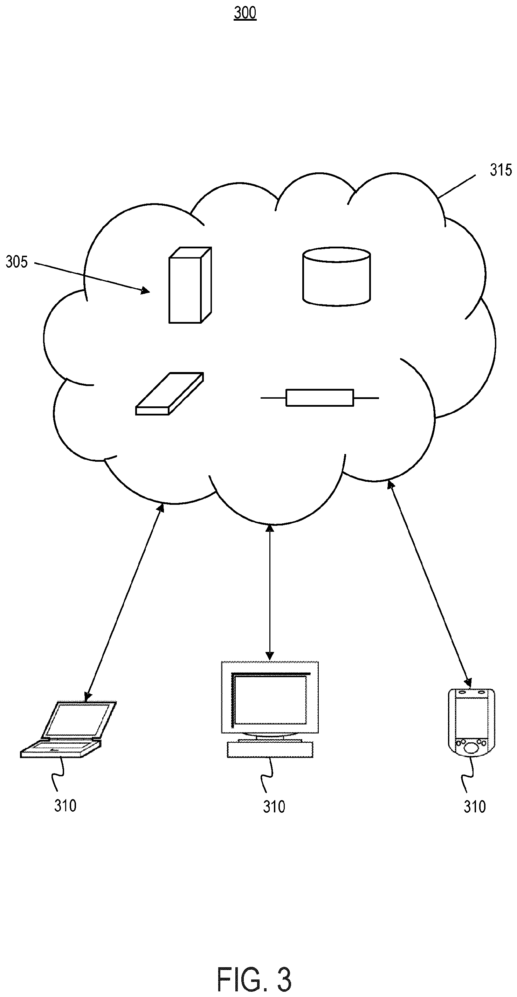

As shown in FIG. 2, computing system 200 includes a computing device 205. The computing device 205 can be resident on a network infrastructure, such as within a cloud environment, as shown in FIG. 3, or can be a separate independent computing device (e.g., a computing device of a third-party service provider). The computing device 205 can include a bus 210, a processor 215, a storage device 220, a system memory (hardware device) 225, one or more input devices 230, one or more output devices 235, and a communication interface 240. One or more components of the computing system 200 can be part of or form the data processing system 105.

The bus 210 permits communication among the components of computing device 205. For example, bus 210 can be any of several types of bus structures including a memory bus or memory controller, a peripheral bus, and a local bus using any of a variety of bus architectures to provide one or more wired or wireless communication links or paths for transferring data and/or power to, from, or between various other components of computing device 205.

The processor 215 can be one or more processors or microprocessors that include any processing circuitry operative to interpret and execute computer readable program instructions, such as program instructions for controlling the operation and performance of one or more of the various other components of computing device 205. In embodiments, processor 215 interprets and executes the processes, steps, functions, and/or operations of the technical solutions described herein, which can be operatively implemented by the computer readable program instructions.

For example, processor 215 provides an enterprise-wide security approach with all stakeholders (e.g., Dev teams, leadership, CSO office, etc.) with a set of various anomaly detection and transaction (e.g., payroll processing) integrity functionalities in a single tool. In some embodiments, the processor 215 uniformly integrates or packages existing functions for anomaly detection (e.g., using AI or other features) into a transaction integrity tool that standardizes and visually displays the output over different development teams for any purposes of anomaly detection or transaction integrity. The integrated security tool can capture specific limitations of the different teams, i.e., ensure that the tools support varied team development methodologies and different tech stacks to capture security vulnerabilities. The processor 215 also establishes a regular feedback mechanism and can be used to develop a process for remediation timelines and priority, including at-risk vulnerabilities.

In embodiments, processor 215 can receive input signals from one or more input devices 230 and/or drive output signals through one or more output devices 235. The input devices 230 can be, for example, a keyboard, touch sensitive user interface (UI), etc., as is known to those of skill in the art such that no further description is required for a complete understanding of the technical solutions described herein. The output devices 235 can be, for example, any display device, printer, etc., as is known to those of skill in the art such that no further description is required for a complete understanding of the technical solutions described herein.

The storage device 220 can include removable/non-removable, volatile/non-volatile computer readable media, such as, but not limited to, non-transitory media such as magnetic and/or optical recording media and their corresponding drives. The drives and their associated computer readable media provide for storage of computer readable program instructions, data structures, program modules and other data for operation of computing device 205 in accordance with the different aspects of the technical solutions described herein. In embodiments, storage device 220 can store operating system 245, application programs 250, and program data 255 in accordance with aspects of the technical solutions described herein.

The system memory 225 can include one or more storage mediums, including for example, non-transitory media such as flash memory, permanent memory such as read-only memory ("ROM"), semi-permanent memory such as random-access memory ("RAM"), any other suitable type of storage component, or any combination thereof. In some embodiments, an input/output system 220 (BIOS) including the basic routines that help to transfer information between the various other components of computing device 205, such as during start-up, can be stored in the ROM. Additionally, data and/or program modules 225, such as at least a portion of operating system 245, application programs 250, and/or program data 255, that are accessible to and/or presently being operated on by processor 215 can be contained in the RAM.

The communication interface 240 can include any transceiver-like mechanism (e.g., a network interface, a network adapter, a modem, or combinations thereof) that enables computing device 205 to communicate with remote devices or systems, such as a mobile device or other computing devices such as, for example, a server in a networked environment, e.g., cloud environment. For example, computing device 205 can be connected to remote devices or systems via one or more local area networks (LAN) and/or one or more wide area networks (WAN) using communication interface 240.

As discussed herein, computing system 200 can be configured to integrate different anomaly detection and transaction integrity features into a single workbench or tool. This allows developers and other team members a uniform approach to assessing security vulnerabilities throughout the enterprise. In particular, computing device 205 can perform tasks (e.g., process, steps, methods and/or functionality) in response to processor 215 executing program instructions contained in a computer readable medium, such as system memory 225. The program instructions can be read into system memory 225 from another computer readable medium, such as data storage device 220, or from another device via the communication interface 240 or server within or outside of a cloud environment. In embodiments, an operator can interact with computing device 205 via the one or more input devices 230 and/or the one or more output devices 235 to facilitate performance of the tasks and/or realize the end results of such tasks in accordance with aspects of the technical solutions described herein. In additional or alternative embodiments, hardwired circuitry can be used in place of or in combination with the program instructions to implement the tasks, e.g., steps, methods and/or functionality, consistent with the different aspects of the technical solutions described herein. Thus, the steps, methods and/or functionality described herein can be implemented in any combination of hardware circuitry and software.

FIG. 3 shows an exemplary cloud computing environment 300 in accordance with aspects of the technical solutions described herein. In embodiments, one or more aspects, functions and/or processes described herein can be performed and/or provided via cloud computing environment 300. As depicted in FIG. 3, cloud computing environment 300 includes cloud resources 305 that are made available to client devices 310 via a network 315, such as the Internet. Cloud resources 305 can be deployed or provided on a single network or a distributed network. Cloud resources 305 can be distributed across multiple cloud computing systems and/or individual network enabled computing devices. Cloud resources 305 can include a variety of hardware and/or software computing resources, such as servers, databases, storage, networks, applications, and platforms that perform the functions provided herein, including storing code, anomaly detection, and transaction integrity features or functionalities into a uniform and standardized application, e.g., display.

Client devices 310 can comprise any suitable type of network-enabled computing device, such as servers, desktop computers, laptop computers, handheld computers (e.g., smartphones, tablet computers), set top boxes, and network-enabled hard drives. Cloud resources 305 are typically provided and maintained by a service provider so that a client does not need to maintain resources on a local client device 310. In embodiments, cloud resources 305 can include one or more computing system 200 of FIG. 2 that are specifically adapted to perform one or more of the functions and/or processes described herein.

Cloud computing environment 300 can be configured such that cloud resources 305 provide computing resources to client devices 310 through a variety of service models, such as Software as a Service (SaaS), Platforms as a service (PaaS), Infrastructure as a Service (IaaS), and/or any other cloud service models. Cloud resources 305 can be configured, in some cases, to provide multiple service models to a client device 310. For example, cloud resources 305 can provide both SaaS and IaaS to a client device 310. Cloud resources 305 can be configured, in some cases, to provide different service models to different client devices 310. For example, cloud resources 305 can provide SaaS to a first client device 310 and PaaS to a second client device 310.

Cloud computing environment 300 can be configured such that cloud resources 305 provide computing resources to client devices 310 through a variety of deployment models, such as public, private, community, hybrid, and/or any other cloud deployment model. Cloud resources 305 can be configured, in some cases, to support multiple deployment models. For example, cloud resources 305 can provide one set of computing resources through a public deployment model and another set of computing resources through a private deployment model.

In embodiments, software and/or hardware that performs one or more of the aspects, functions and/or processes described herein can be accessed and/or utilized by a client (e.g., an enterprise or an end user) as one or more of a SaaS, PaaS and IaaS model in one or more of a private, community, public, and hybrid cloud. Moreover, although aspects of the technical solutions described herein include a description of cloud computing, the systems and methods described herein are not limited to cloud computing and instead can be implemented on any suitable computing environment.

Cloud resources 305 can be configured to provide a variety of functionality that involves user interaction. Accordingly, a user interface (UI) can be provided for communicating with cloud resources 305 and/or performing tasks associated with cloud resources 305. The UI can be accessed via a client device 310 in communication with cloud resources 305. The UI can be configured to operate in a variety of client modes, including a fat client mode, a thin client mode, or a hybrid client mode, depending on the storage and processing capabilities of cloud resources 305 and/or client device 310. Therefore, a UI can be implemented as a standalone application operating at the client device in some embodiments. In other embodiments, a web browser-based portal can be used to provide the UI. Any other configuration to access cloud resources 305 can also be used in various implementations.

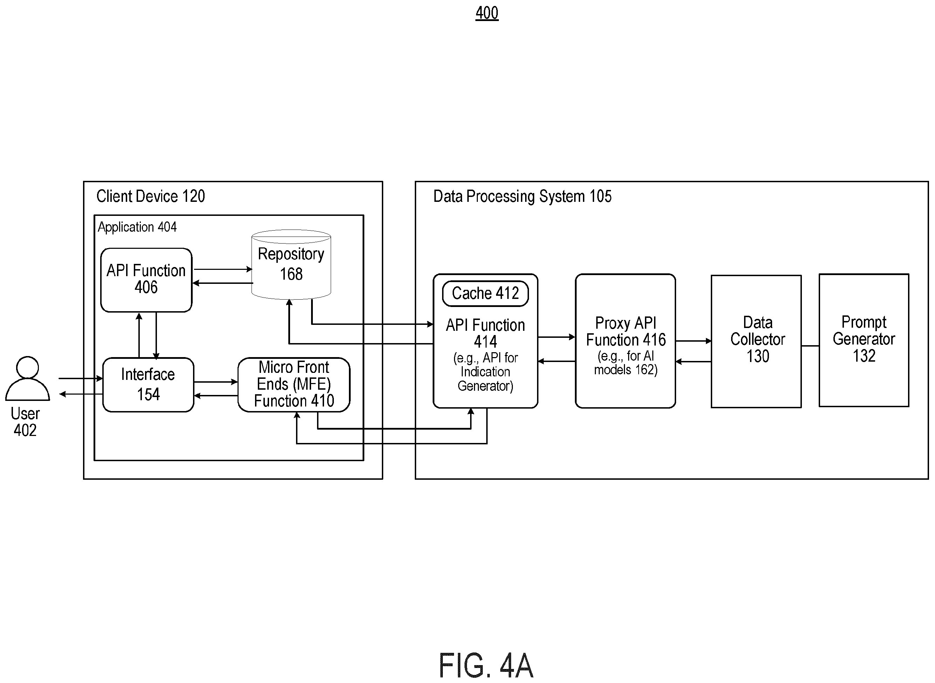

FIG. 4A illustrates an example system 400 utilizing application programming interface (API) calls to implement a model-based resource availability automated service for client requests. A user 402 can utilize an application 404 on a client device 120 to generate requests 122 (e.g., queries) on use or availability of resources 114 associated with an account of the user (e.g., account 174 of the user 402). The user may access a graphical user interface 154 of the application 404, which can include any functionality for communicating with, or utilizing, any features or functionalities of the data processing system 105. Interface 154 can be communicatively coupled with an API function 406 of the application 404, which can be communicatively coupled with a database of a repository 168 of the application 404. Interface 154 can include a chatbot functionality for automated generation of responses to client device requests 122. The interface 154 can be communicatively coupled with micro front ends (MFE) function 410 of the application 404. The repository 168 and the MFE function 410 can each be communicatively coupled with API function 414 of the data processing system 105. The API function 414 can include an API functionality for the output generator 150. The API function 414 can include a cache 412. The API function 414 can be communicatively coupled with a Proxy API function 416 of the data processing system 105, which can include the API functionality for AI models 162. The API function 416 can be communicatively coupled with a data collector 130 of the data processing system 105, which can be communicatively coupled with the prompt generator 136 of the data processing system 105.

Micro front ends function 410, also referred to as micro front-ends function 410 or MFE function 410, can include any combination of hardware and software for modularizing and managing user interface components of an application 404 to interface with data processing system 105 operations or functions. The micro front-ends function 410 can break down the user interface into smaller, independently manageable units (e.g., micro front-ends) that each can handle specific aspects of the application's functionality. For instance, a micro front end can be configured to handle (e.g., display or provide vacation, overtime, or other resource balances). For instance, one micro front-end can be dedicated to displaying leave balances, while another manages user account settings. The MFE function 410 can allow for more flexible development and deployment, allowing different teams to work on separate components without affecting the overall system. The micro front ends function can be configured to invoke or utilize one or more micro front-end layers with one or more application programming interfaces (APIs) to utilize the one or more API calls to input the prompt 138 into the model 162. For instance, the MFE function.

In example 400, the API function 406 of application 404 can handle requests 122 from the graphical user interface 154 by interfacing with both the database 168 and the micro front-end (MFE) function 410. The API function 406 can facilitate data retrieval from the repository 168, which can store information on user account resources, such as leave entitlements or compensation. The API function 406 can also manage interactions with the MFE function 410, which can provide user-facing features and visual elements. For example, when a user requests their leave balance, API function 406 can fetch the data from a database of the repository 168 and render it through MFE function 410.

The API function 414 of the data processing system 105 can serve as a link between the application 404 and the data processing system 105. The API function 414 can interface with both the database of the repository 168 and the MFE function 410 to process and relay requests and responses. The API function 414 can trigger output generator 150 functionality, which can prompt utilization of AI models 162 to generate the prompts 138 by the prompts generator 136. The API function 414 can include a cache 412 to temporarily store frequently accessed data, reducing latency and enhancing response times. For instance, when a resource availability query is processed, API function 414 can quickly retrieve cached data from the cache 412 or access the database of the repository 168 to provide timely responses.

The Proxy API function 416 can act as an intermediary between API function 414 and the AI models 162. The Proxy API function 416 can manage interactions with the AI models 162, routing requests and responses between the application 404 and the generative AI models 162 used for complex determinations. Proxy API function 416 can ensure that prompts generated by the prompt generator 136 are properly communicated to the AI models 162. The AI models 162 can then analyze the data from the data collector 130 and utilize constraints 178 and historical data 172 to produce accurate responses to the request 122 (e.g., the query) from the user 402. For example, if a user 402 queries about the impact of recent policy changes on their leave balance, the Proxy API function 416 can facilitate the processing of this query by the AI models 162 and return the refined results to the user, using the data collector 130 and prompt generator 136 functionalities and operations.

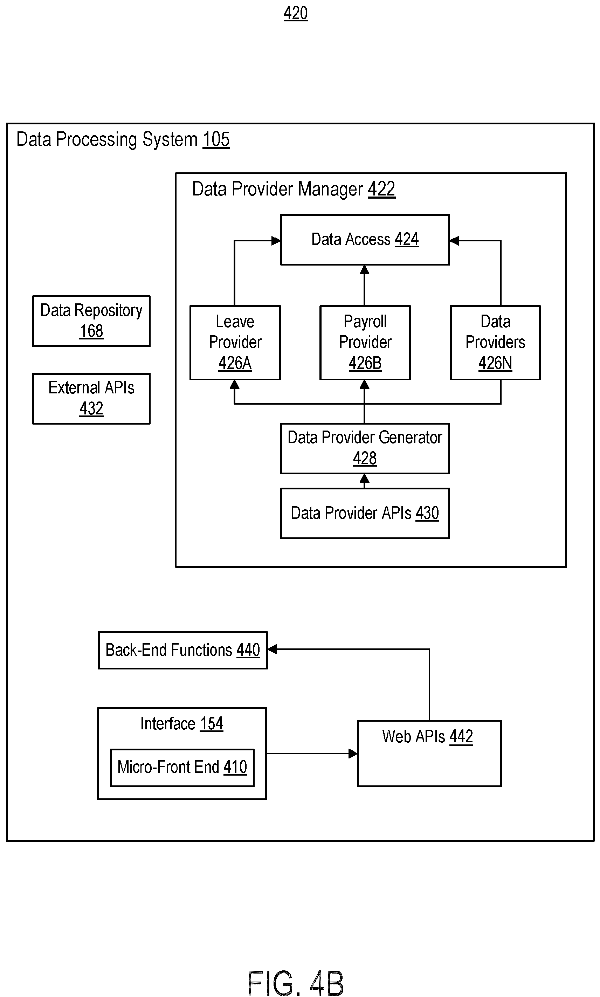

FIG. 4B illustrates a block diagram of an example architecture 420 of a data processing system 105 for managing resource availability using modular data provider components and API integrations. The data processing system 105 can include at least one data provider manager 422, at least one data access 424, one or more leave providers 426A, one or more payroll providers 426B, one or more data providers 426N, at least one data provider generator 428, at least one data provider APIs 430, at least one micro front ends function 410, at least one interface 154, at least one data repository 168, at least one external APIs 432, at least one back-end functions 440, and at least one web APIs 442.

FIG. 4B illustrates how the data processing system 105 may be architected to support modular integration of various data sources and provider functionalities for resource availability determinations. The data provider manager 422 can coordinate the selection and orchestration of multiple provider modules, including leave providers 426A, payroll providers 426B, and additional data providers 426N, each of which may be instantiated or managed according to specific resource types or use cases. The data provider manager 422 can utilize the data provider generator 428 to instantiate or configure new provider modules 426, and can interface with data access 424 to retrieve or update relevant data from the data repository 168 or other sources. The data provider APIs 430 can expose standardized interfaces for communication between provider modules and other components within the system, supporting interoperability and scalability.

The architecture further enables integration with external data sources and downstream systems through external APIs 432, which can facilitate the retrieval or exchange of data with third-party platforms or regulatory databases. Back-end functions 440 may implement core business logic or processing workflows for resource availability, while the micro front ends function 410 can modularize user interface components to support flexible and independent development of client-facing features. Web APIs 442 can provide API endpoints for communication between the micro front ends and the back-end functions, allowing for seamless data flow and user interaction across the distributed system and adapting to evolving data.

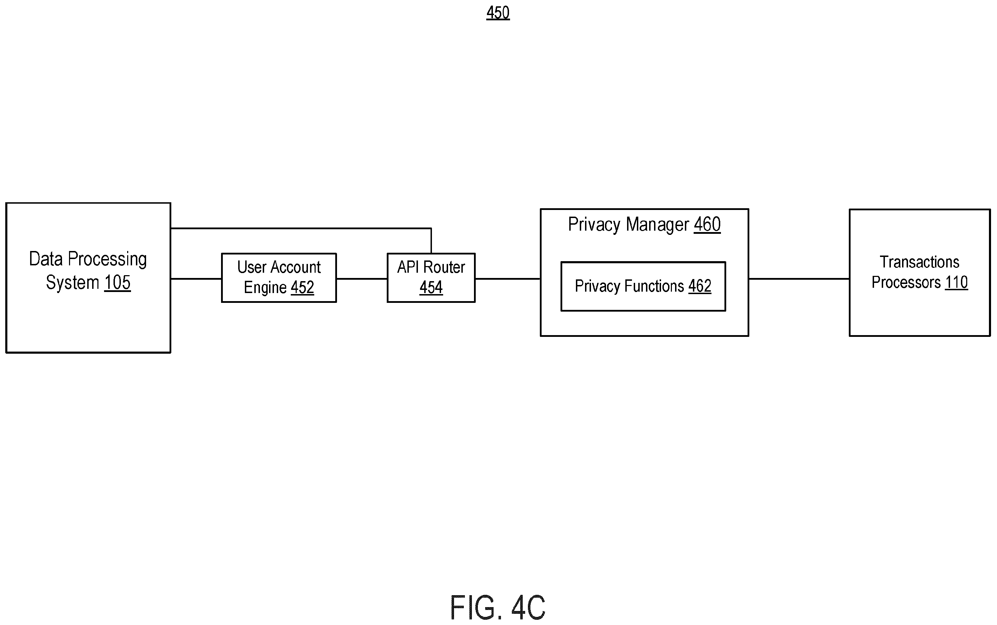

FIG. 4C illustrates a system architecture 450 for routing user account data through privacy management functions prior to processing transactions. The data processing system 105 can be configured to manage and coordinate the flow of user account information within the architecture. The user account engine 452 can operate in conjunction with the data processing system 105 to manage user-specific data and account attributes, preparing relevant information for downstream processing. The API router 454 can serve as an intermediary, directing user account data from the user account engine 452 to subsequent components in the system, and facilitating communication between modules while ensuring proper formatting and protocol adherence.

The privacy manager 460 can be positioned downstream of the API router 454 and can be responsible for enforcing privacy controls and compliance limitations on user account data prior to transaction processing by transactions processors 110. Within the privacy manager 460, privacy functions 462 can be implemented to perform operations such as data anonymization, access control enforcement, and validation of data handling policies. Once privacy management is complete, the processed data is transmitted to the transactions processors 110, which execute automated processing functions related to resource transactions, such as payroll, leave management, or expense processing.

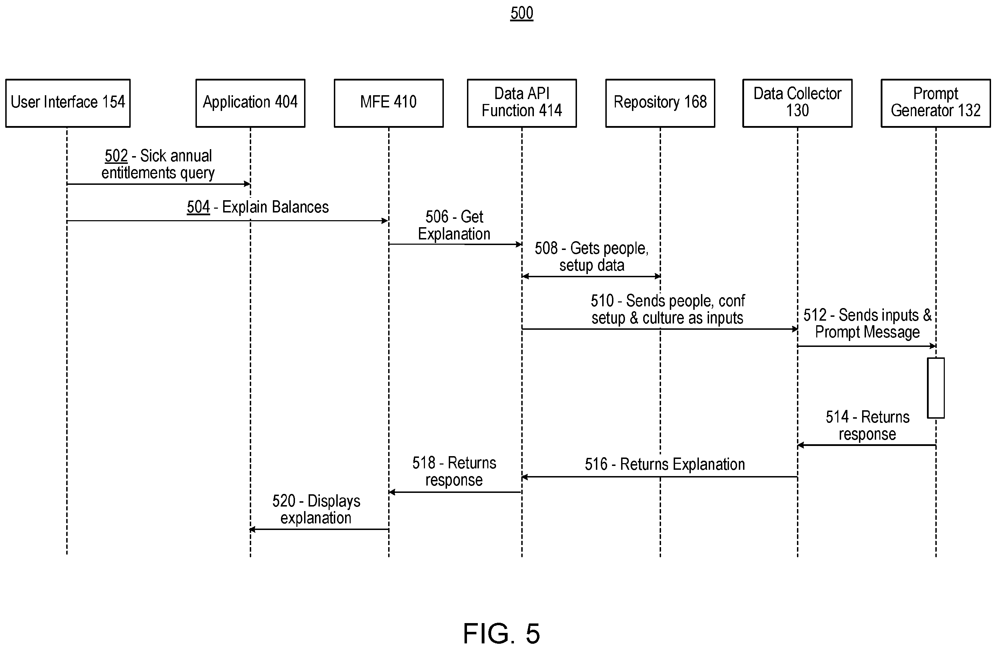

FIG. 5 illustrates an example flow diagram of a method 500 for implementing AI model-based resource availability platform for improving responses to client requests. The method 500 can include acts or operations 502-520 that can be performed in any order or sequence, with some of the acts or operations being omitted or performed multiple times, depending on the implementation. Acts 502-520 can be performed, for example, using one or more processors 215 configured by instructions stored in system memory 225, where the instructions, when executed by the one or more processors 215, can trigger or cause the one or more processors 215 to implement the acts or operations described.

At 502, a query or request 122 can be generated at a user interface 154, requesting information on vacation, leave, or sick annual entitlements, or any other resource 114. For instance, a user 402 can utilize a user interface 154 of an application 404 operating on a client device 120. The user interface 154 can receive a user request 122 that can include a string of characters or textual input inquiring sick, vacation, or leave annual entitlements.

At 504, the user interface can send to the MFE function 410 a request to explain balances or availabilities of one or more inquired or requested resources 114. The micro front end features can be configured to trigger API calls to facilitate generating the indication 152 for the response.

At 506, the micro front end function 410 can generate requests to the data API function 414 to get or generate explanations. The MFE 410 can include one or more modular functions configured to inquire about specific types of resources 114. For instance, an MFE function 410 can be configured to seek explanation, data, or information on any particular resource 114, such as a parental leave, a vacation day balance, a sick days balance, or any other resource.

At 508, the data API function 414can get people and set up data information from the repository 168. The data API function 414 can communicate with a database of a repository to get the information from the data structures associated with a particular account 174 of the user 402. The information can be acquired or received, for example, from the transactions processor 110 and the APFs 116 processing various data about entities 112.

At 510, the data collector 130 can send inputs and prompt message to the prompt generator 136. By sending this information, the data collector 130 can trigger the prompt generator 136 to begin generating the output (e.g., indication 152).

At 512, the prompt generator 136 can forward the information used for the generation of the prompts 138 (e.g., from the repository 168) to the prompt generator 136. The prompt generator 136 can receive the information and generate the indication 152. The prompt generator 136 can, for example, utilize or trigger one or more generative AI models 162 to implement the generation of the prompt 138. The prompt generator 136 can feed the constraints 178 and historical data 172 into the generative AI model 162 and receive the response from the model (e.g., the indication 152).

At 514, the prompt generator 136 can return the response (e.g., the generated indication 152) to the data collector 130. The prompt generator 136 can return the indication 152 in response to the validation of the indication 152 by the validator function 140, which can compare one or more generated parameters or values of the indication 152 with one or more thresholds 142. For instance, one or more thresholds 142 can be generated to implement corrections or facilitate validation or quality control in view of changes or amendments to regional laws or regulations (e.g., of resources 114 inquired about, such as leave entitlements) for the region associated with the account 174 of the user (e.g., the country in which the employee resides or country in which the entity 112 operates).

At 516, the data collector 130 can return the explanation to the data API function 414. The data collector 130 can utilize the interface 154 along with one or more AI models 162 to generate a textual version of the response to the request 122 using the outputs of the response returned at 514.

At 518, the data API function 414 can operate with the interface 154 to return the response to the MFE 410. The returned response can include values or parameters corresponding to the inquired or requested resources 114 (e.g., the number of vacation days, the number or availability of overtime, or any other resource 114).

At 520, the MFE 410 can configure or transform the response from 518 into a format for display to the user, via the application 404. The MFE 410 can utilize one or more micro front ends to generate portions of the user interface on the client device 120 that can be pieced together or arranged to be displayed to the user.

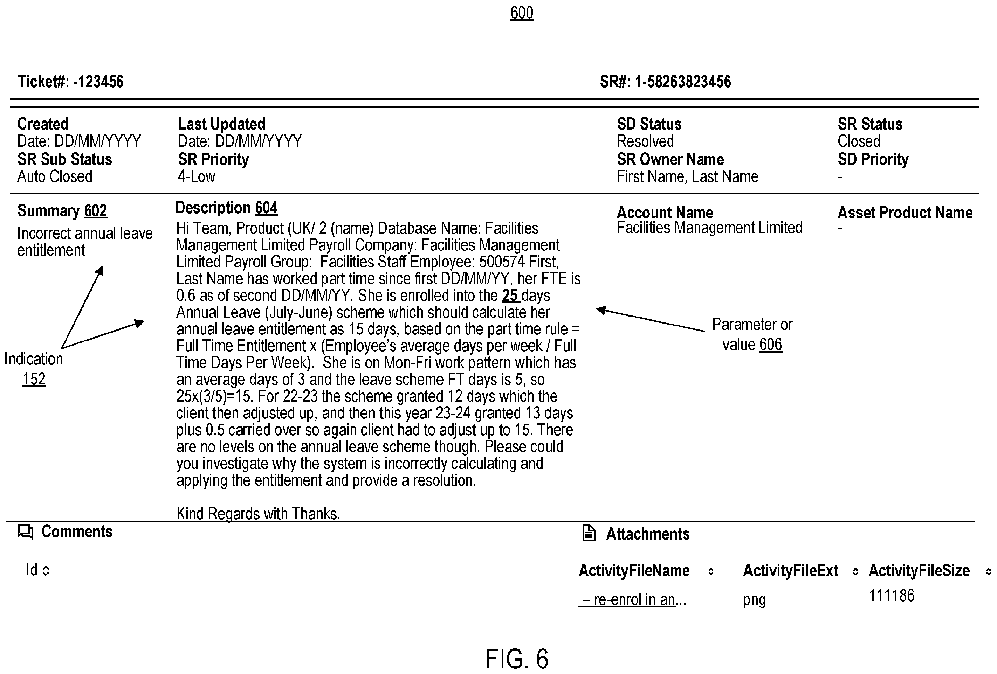

FIG. 6 illustrates an example 600 of an output content of an interface 154 displayed on the client device 120 in response to the request 122 (e.g., inquiry) of the client about the availability of the resources 114 associated with an account 174 of the user. The example 600 can include a ticket number associated with the request (e.g., the query) and can include the indication 152 generated by the data processing system 105 that can be presented in the form of the summary 602 and the description 604. The summary 602 can include a brief textual description of the determination in the indication 152. The description 604 can include a detailed description of the indication 152. The description 604 can be formulated or expressed in textual format, explaining the values or parameters 606, such as a parameter or a value indicative of the number of days of the annual leave that can be determined by the data processing system 105 using the gen AI models 162 operating based on the prompts 138 from the prompts generator 136.

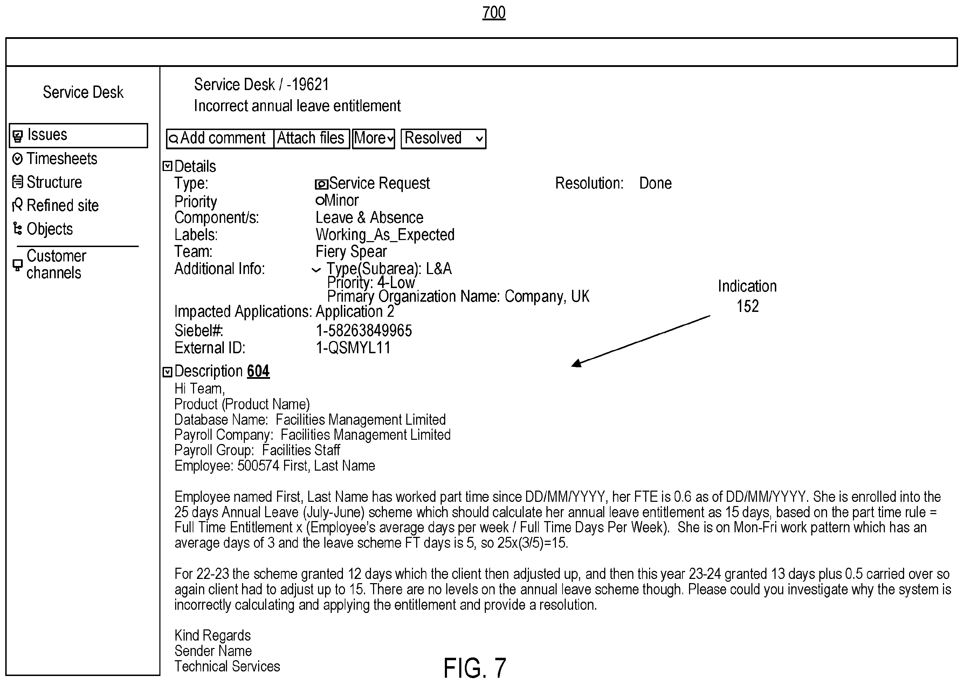

FIG. 7 illustrates an example 700 of another output content of an interface 154 displayed on the client device 120 in response to the request 122 (e.g., inquiry) of the client about the availability of the resources 114 associated with an account 174 of the user. The example 700 can include a service desk number associated with the request 122 (e.g., the query) and can include the indication 152 generated by the data processing system 105 along with the description 604. The description 604 can provide a textual version of the output indication 152 generated by the data processing system 105.

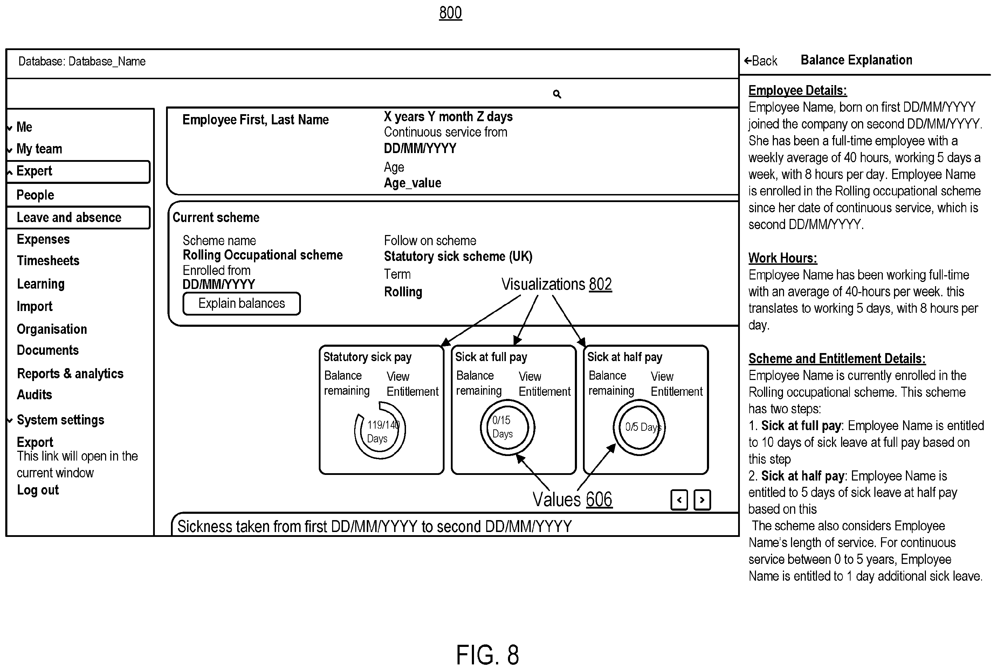

FIG. 8 illustrates an example 800 of an output content on an interface 154 displayed on the client device 120 along with visualizations of the inquired resources 114 associated with an account 174 of the user. The example 800 can include one or more visualizations or graphs indicating or illustrating acquired and available resources 114 along with their corresponding values or parameters 606. For example, the visualizations 802 can provide graphical indications or plots of resources 114, such as statutory sick pay balance, sick at full pay balance remaining and sick at half pay balance utilized.

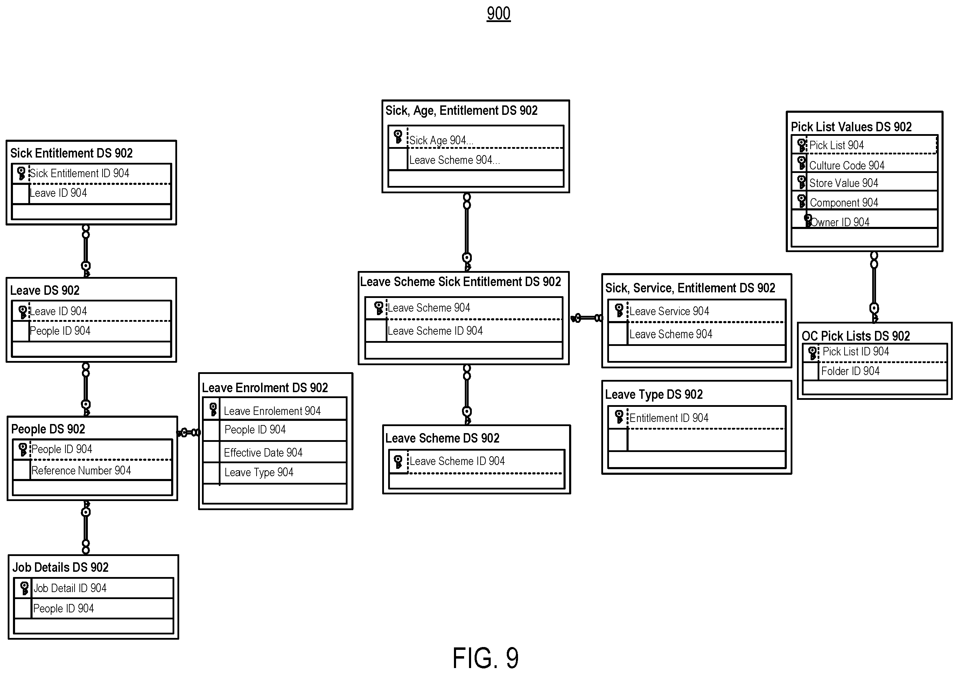

FIG. 9 illustrates an example 900 of a collection of data structures 902 that can be utilized by the data processing system 105 for the generation of prompts 138. Data structures 902 can be stored in a repository 162 and include any information for generating prompts 138 or indications 152. Data structures 902 can include various entries or parameters 904 of the data structure. Entries or parameters 904 can include, for example, identifiers of the type of leave (e.g., leave ID 904), sick entitlement identifiers (e.g., sick entitlement ID 904), job details identifiers (e.g., job details ID 904), or any other type of entries of the data structure 902. The data structures 902 can be included in a database of the data repository 168 and can be updated by the transactions processor 110 (e.g., per computations or determinations of the APFs 116) and stored as entries 904. In response to requests from the data processing system 105 components (e.g., data collector 130, prompts generator 136, validator function 140, or output generator 150), the data structures 902 can be accessed, and the values or entries 904 can be read and utilized for operations or determinations of the data processing system 105.

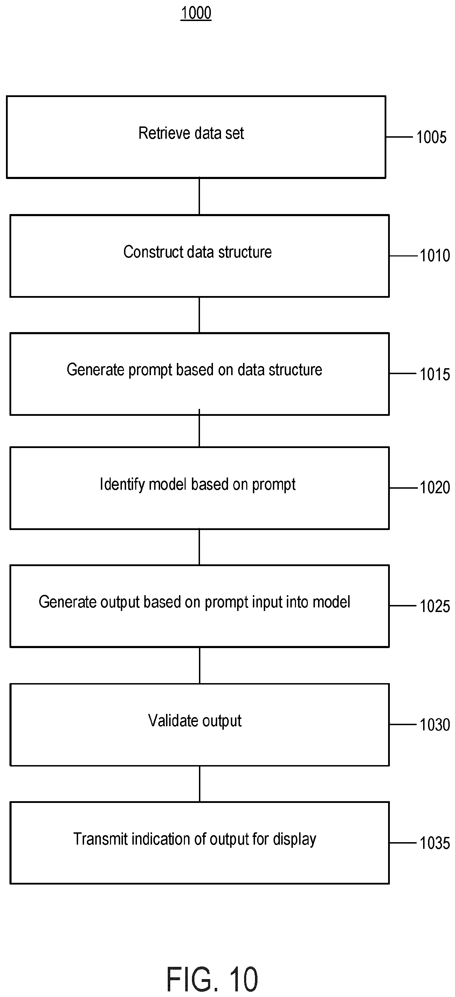

FIG. 10 depicts a method 1000 for providing model-based resource availability platform for improving responses to client requests. The method 1000 can be performed using one or more systems, features, acts, or components depicted or discussed in connection with FIGs. 1-9. For instance, method 1000 can be implemented, for example, using a data processing system 105 of FIG. 1 implemented on a computing system 200 of FIG. 2 or on a cloud computing environment 300 of FIG. 3. For instance, the method 1000 can be implemented by one or more processors 215 executing operations based on instructions and data stored in a system memory 225, where the instructions can cause the one or more processors 215 to implement any functionality of the data processing system 105. The method 500 can include any acts be implemented in any order sequence or combination with potentially additional acts, some of which can overlap in time, and one or more of which can be omitted in various contemplated implementations. The method 1000 can include acts or operations 1005-1035. At 1005, a data set can be retrieved. At 1010, a data structure can be constructed. At 1015, a prompt can be generated based on the data structure. At 1020, a model can be identified based on the prompt. At 1025, an output can be generated based on the prompt input into the model. At 1030, the output can be validated. At 1035, the indication of output for display can be transmitted.

At 1005, a data set can be received. The method can include one or more processors retrieving a data set corresponding to a resource. The one or more processors can retrieve the data set responsive to a request for availability of the resource. For instance, the request can include a query from a client device about availability, balance, or status of one or more resources associated with an account of an employee of an entity (e.g., a corporation or an organization). The request can be received via an interface, such as a chatbot with a graphical user interface that can be accessed using an application executed on a client device. The resource can be any resource or asset associated with the account, such as, leave entitlement, vacation days, sick days, personal time off days, parental leave, short-term or long-term disability entitlement, bonus, overtime or compensation accrual or amounts, retirement account contributions, or any other resource processed or transacted on behalf of the entity and the associated accounts.

The data set can include any information or data comprising at least one constraint related to the resource or at least one information on the historical utilization of the resource. For instance, the constraint can include any predefined condition or restriction affecting resource management, such as maximum leave days allowed, regional regulatory limits on leave, vacation, overtime or compensation, minimum service duration for leave eligibility, accrual rate limitations, geographic indicators for regional employment laws, company-specific leave policies, approval thresholds for extended leave, family and medical leave compliance, holiday adjustments, probationary period restrictions, usage caps for discretionary leave, or overtime compensation limits. Historical data on utilization of resources can include any data or information on past records and trends regarding how resources have been used or allocated. The historical data can correspond to, for instance, any usage of leave days, overtime hours, sick leave, vacation time, parental leave, bonuses, employee attendance, work hours, compensation adjustments, or training hours.

The data set can include one or more models, such as generative artificial intelligence models trained using the historical data on resource usage, availability, or constraints. The data set can include a data entity model corresponding to a tree structure. The data model corresponding to a tree structure can include any organized hierarchy representing relationships among different data entities. Each node of the data entities can represent a specific data element, such as a resource (e.g., leave types, policy details), and each of the branches can denote the interconnections between the data elements. An AI model can utilize the tree structure to implement querying, management, and retrieval of hierarchical data related to resource availability and constraints.

The data entity model can include geographic constraints on availability for types of resources. The model can be trained with generative artificial intelligence. The model can include a transformer-based self-attention mechanism. The transformer-based self-attention mechanism can be configured to process input data by weighing the relevance of different parts of the input sequence (e.g., prompt) and allowing for the generation of an indication by focusing on the pertinent information to determine the resource availability given the historical data and the constraints.

The data processing system can be configured to automatically trigger generation of the indication on availability of resources in response to a detection of a discrepancy in the data set. For instance, the one or more processors can be configured to detect a discrepancy in availability of the resource in an electronic record, such as a data structure for a resource associated with an account. The discrepancy can be detected based on a process by an automated processing function of the transactions processor. The one or more processors can be configured to automatically generate, responsive to the detection of the discrepancy, the request (e.g., generate a query) for the availability of the resource. The request can be used to trigger the prompts generator and the data collector to start the construction of the prompt for generating the indication with the resource availability response to the request (e.g., the query).

At 1010, a data structure can be constructed. The method can include the one or more processors constructing a data structure, based on the data set. The data structure can be constructed, generated, or utilized to data structure to replace the request in generating the output. The data structure can indicate a context of the data structure and one or more characteristics of the electronic account. The context can be an identifier of the type of request, an indication of the workflow or business process associated with the request, or information regarding the operational environment in which the request was made. The one or more characteristics can include an account identifier, a department code, a user role, a resource type, region or location information, or a project assignment. The one or more characteristics can be indicative of a parameter for the resource and data associated with the electronic account.

The data structure generator can construct or generate the data structure, based on at least on a type of the resource, a type of a data structure for the type of the resource. The construction of the data structure can include mapping attributes from the data set relevant to the identified resource type into defined fields or templates. For instance, the data structure generator can associate leave-related requests with leave balance, accrual rate, and policy limit fields, or associate expense requests with fields for expense category, amount, approval level, and applicable policy constraints. The data structure can further include formatting rules or serialization protocols, such as JSON, XML, or other structured representations, to enable interoperability with other system components. The data structure generator can attach a context identifier, a timestamp, or a version tag to support tracking and auditing of resource-related transactions. The data structure, once constructed, can be used as the basis for prompt generation, validation, historical comparison, or automated processing workflows.

At 1015, a prompt can be constructed. The method can include a prompt generator generating a prompt, based on the data structure. The generated prompt can include a first portion corresponding to the constraint for the parameter of the resource and a second portion corresponding to the utilization data of the resource according to geographical data. The first portion can convey details such as a regulatory limit, organizational policy, or project-specific cap that governs how much of the resource can be allocated or approved; for example, a maximum allowable leave days per year or an expense reimbursement ceiling. The second portion can comprise historical or recent usage information contextualized to a specific region, jurisdiction, or business unit, such as the amount of resources already utilized in a particular country or within a designated project during a reporting period. For instance, if the resource is annual leave, the first portion of the prompt might indicate a company's or country's leave policy stating, "maximum 20 days per year," while the second portion might state, "the employee has used 12 leave days in Germany in the current year." In the case of an expense request, the first portion may represent the allowable cap for a particular department, and the second portion could reflect the month-to-date expenses incurred in that region or department, enabling the model to consider both the governing rule and the employee's actual usage when generating an output.

The method can include the one or more processors constructing, based on the data set, a prompt with a first portion corresponding to the constraint and a second portion corresponding to the historic utilization. For instance, a prompt generator can construct a prompt by integrating both constraint information and historic utilization data. For instance, the prompt generator can combine information from constraints with historic data on resource utilization to generate one or more portions of the prompt instructing the model to generate an output indication. For example, the prompt generator can create a prompt that includes a constraint, such as a maximum vacation days (e.g., an inquired resource) and historic data such as an average use rate of the vacation days (e.g., resource) for the account.

The prompt can be constructed in any form or format for the model, such as a JSON file or format. The prompt can be constructed as a data structure comprising one or more values or parameters and one or more instructions or commands, generated based on historical data or constraints. The one or more processors can pre-process, prior to construction of the prompt, the data set to filter out invalid entries in the data set. The filtering can be implemented, based on, for example, timestamps of data to exclude expired data (e.g., data on use that precedes a change in the regulation, policy, or rule). The prompt generator can construct the prompt using the preprocessed or filtered data or entries.

At 1020, a model can be identified. The method can include the one or more processors identifying, based on the prompt, a model trained with generative artificial intelligence to determine resource availability. The model can be identified or selected based on the type of resource inquired, based on the data structure, or based on information in the request from the client device (e.g., the query seeking information on the resource). The model can be identified or selected based on the account associated with the request or the query. The model can be identified or selected based on the entity (e.g., corporation or organization) associated with the request or the account. The model selector can select the model from a plurality of models based on any combination of information on the resource, account, entity, or region (e.g., country, state, or region). For instance, the model selector can select a model for the state or country associated with the account or the entity, wherein the model is trained on the regulations associated with that state or country.

The model selector can utilize one or more AI models to select the model to utilize. For instance, the one or more processors can identify, from a plurality of models trained with generative artificial intelligence to determine availability of a plurality of resources according to regulations of a plurality of geographical areas, the model trained with generative artificial intelligence to determine the availability of the resource in a geographical area identified according to the request.

At 1025, the prompt and the model can be used to generate an output identifying resource availability. The method can include the output generator generating the output identifying the resource availability based on the input of the prompt into the selected or identified model. The method can include the one or more processors inputting the prompt into the model to generate an output that indicates the availability of the resource. For instance, the output generator can utilize the prompt as an input into a generative AI model trained on resource availability and usage based on historical data. For example, the prompt can cause the generative AI model to utilize a transformer-based self-attention mechanism of the generative AI model to produce an output indication.

The output or indication can include any combination of textual, numerical, or graphical output presenting state, status, or balance of one or more resources associated with the account. The output indication can list or include constraints for one or more resources. The output or indication can include or indicate a balance or current amount of resource remaining, a rate of generation of the resource, a rate of consumption of the resource, or any constraints or limitations on generating or consuming (e.g., utilizing) the resource.

The one or more processors can invoke a micro front-end layer comprising one or more application programming interfaces to input the prompt into the model. For instance, an output generator can utilize one or more micro front end layers to generate portions of the prompt to be used as the input for the model. The output generator can include the one or more micro front end layers utilizing one or more API calls to call one or more functions to generate or combine one or more portions of the prompt into the prompt.

At 1030, the output can be validated using a threshold. The method can include the one or more processors validating the output based on a comparison with a threshold. For instance, the validation function can generate one or more thresholds. The one or more thresholds can be set to define acceptable ranges for various metrics. The validation function can compare the parameters or values from the indication output with the predefined limits of the thresholds to determine or validate the accuracy of the generated output.

The validation function can utilize one or more thresholds as limitations that can be generated or provided. For example, the validation function can utilize a threshold established at a 5% deviation from the projected budget figure in connection with a resource on expenditure. If the actual expenditure in the output indication exceeds such a threshold, the output indication can be flagged by the validation function for review or further investigation. In an example, a threshold could be set for accuracy, such as 98% accuracy, where outputs falling below this threshold would trigger or cause an adjustment to the prompt and a new generation of the output indication. For example, a threshold can be established for a maximum number of vacation days that can be taken or claimed by an employee associated with the account. The threshold can be established based on an updated regional regulation associated with the region of the account or the entity. The threshold can provide a limitation that postdates the data set used to train the model. The validation function can utilize such a threshold to validate the response or trigger an adjustment in response to the threshold not being satisfied.

The one or more processors can be configured to validate the output using a second model trained with machine learning. For instance, the one or more processors can validate the output using a retrieval-augmented generation technique. The retrieval-augmented generation technique can combine data retrieval with machine learning, updating data being retrieved. The one or more processors can determine that a second output of the model generated with a second prompt is invalid. The one or more processors can adjust or refine, responsive to the invalidation of the second output, the second prompt to generate a third prompt. The one or more processors can input the third prompt into the model to generate a third output that indicates availability of a second resource. The one or more processors (e.g., the validation function) can validate the third output (e.g., indication) and prepare the validated output indication for display.

The one or more processors can be configured to update the electronic record using the validated output from the model. The one or more processors can construct, using the validated output from the model, a data structure for an electronic transaction via a payroll processing system. The one or more processors can execute the electronic transaction via the payroll processing system using the constructed data structure.

At 1035, the validated indication can be displayed. The method can include the validator function transmitting for display, via an interface, and responsive to the validation of the output, the indication of the availability of the resource output to the remote device to be displayed on the remote device. The method can include the one or more processors displaying, via an interface, responsive to the validation, an indication of the availability of the resource output by the model. The method can include a graphical user interface of an application of a client device receiving an indication comprising any combination of one or more textual, graphical, or numerical outputs. The graphical user interface can display the indication providing the validated values or parameters associated with the available resources inquired about in the request. The one or more processors can display, via the interface, responsive to the validation, an indication of the availability of the second resource output by the model. The second resource can be a resource provided responsive to the third prompt input into the model to generate the third output indicative of the availability of the second resource at act 1025. The validated indication can be displayed via a chatbot in the interface.

The foregoing examples have been provided merely for the purpose of explanation and are in no way to be construed as limiting the present description. While aspects of the technical solutions described herein have been described with reference to an exemplary embodiment, it is understood that the words which have been used herein are words of description and illustration, rather than words of limitation. Changes can be made, within the purview of the appended claims, as presently stated and as amended, without departing from the scope and spirit of the technical solutions described herein in their aspects. Although aspects of the technical solutions have been described herein with reference to particular means, materials, and embodiments, the present description is not intended to be limited to the particulars described herein; rather, the technical solutions described herein extend to all functionally equivalent structures, methods and uses, such as are within the scope of the appended claims.

Although an example computing system has been described in FIG. 9, the subject matter including the operations described in this specification can be implemented in other types of digital electronic circuitry, or in computer software, firmware, or hardware, including the structures described in this specification and their structural equivalents, or in combinations of one or more of them.

Some of the description herein emphasizes the structural independence of the aspects of the system components or groupings of operations and responsibilities of these system components. Other groupings that execute similar overall operations are within the scope of the present application. Modules can be implemented in hardware or as computer instructions on a non-transient computer readable storage medium, and modules can be distributed across various hardware or computer-based components.

The systems described above can provide multiple ones of any or each of those components and these components can be provided on either a standalone system or on multiple instantiation in a distributed system. In addition, the systems and methods described above can be provided as one or more computer-readable programs or executable instructions embodied on or in one or more articles of manufacture. The article of manufacture can be cloud storage, a hard disk, a CD-ROM, a flash memory card, a PROM, a RAM, a ROM, or a magnetic tape. In general, the computer-readable programs can be implemented in any programming language, such as LISP, PERL, C, C++, C#, PROLOG, or in any byte code language such as JAVA. The software programs or executable instructions can be stored on or in one or more articles of manufacture as object code.

The subject matter and the operations described in this specification can be implemented in digital electronic circuitry, or in computer software, firmware, or hardware, including the structures described in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device", "component" or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently described systems or methods, their components, acts, or elements to single or plural configurations. References to any act or element being based on any information, act or element may include implementations where the act or element is based at least in part on any information, act, or element.

Any implementation described herein may be combined with any other implementation or embodiment, and references to "an implementation," "some implementations," "one implementation" or the like are not necessarily mutually exclusive and are intended to indicate that a particular feature, structure, or characteristic described in connection with the implementation may be included in at least one implementation or embodiment. Such terms as used herein are not necessarily all referring to the same implementation. Any implementation may be combined with any other implementation, inclusively or exclusively, in any manner consistent with the aspects and implementations described herein.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as substitutions, changes and omissions can be made in the design, operating conditions and arrangement of the described elements and operations without departing from the scope of the technical solutions described herein.

References to "approximately," "substantially", or other terms of degree include variations of +/-10% from the given measurement, unit, or range unless explicitly indicated otherwise. Coupled elements can be electrically, mechanically, or physically coupled with one another directly or with intervening elements. Scope of the Systems and methods described herein is thus indicated by the appended claims, rather than the foregoing description, and changes that come within the meaning and range of equivalency of the claims are embraced therein.

Also disclosed herein are the following numbered clauses:
1. A system, comprising:
   one or more processors, coupled with memory, to:
   retrieve, responsive to a request from a remote device for bandwidth of a resource of an electronic account, a data set corresponding to the resource and comprising utilization data of the resource and a constraint related to the resource;
   construct, based on the data set, a data structure to replace the request, the data structure indicating a context of the data structure and one or more characteristics of the electronic account, the one or more characteristics indicative of a parameter for the resource and data associated with the electronic account.
   generate, based on the data structure, a prompt with a first portion corresponding to the constraint for the parameter of the resource and a second portion corresponding to the utilization data of the resource according to geographical data;
   identify, based on the prompt, a model trained with generative artificial intelligence to determine resource bandwidth based on the one or more characteristics and according to the context;
   input the prompt into the model to generate an output that indicates the bandwidth of the resource;
   validate the output based on a comparison with a threshold; and
   transmit for display, via an interface, responsive to the validation, to the remote device an indication of the bandwidth of the resource output by the model on a display of the remote device.
2. The system of clause 1, wherein the one or more processors further:
   construct, based on at least on a type of the resource, a type of a data structure for the type of the resource;
   select, based on the type of the data structure, a type of the prompt from a plurality of types of prompts; and
   generate, responsive to the selection, the prompt.
3. The system of clause 1 or 2, wherein the one or more processors further:
   identify historical data corresponding to the resource, the historical data indicative of a prior utilization of the resource associated with the electronic account;
   compare the output to the historical data to determine whether the output deviates from the historical data by more than a deviation threshold;
   generate, responsive to the output deviating from the historical data by more than the deviation threshold, an anomaly alert; and
   store the anomaly alert in a data repository in association with the electronic account.
4. The system of any preceding clause, wherein the resource comprises at least one of: a leave entitlement, a payroll compensation, a reimbursement, an expense item, a training credit, a travel allowance, a retirement plan contribution, a stock option, or an access permission.
5. The system of any preceding clause, wherein the one or more processors further:
   receive, from the model, a value for the parameter of the resource; and
   validate the value of the output based on the comparison of the value with the constraint.
6. The system of any preceding clause, wherein the one or more processors further:
   identify a plurality of validation rules to validate the output, each rule of the plurality of validation rules corresponding to at least one of: a regulation for a geographical area corresponding to the resource, a policy of an entity associated with the electronic account, or a limitation of the resource for a project associated with the electronic account;
   validate the output according to at least a rule of the plurality of validation rules; and
   generate, in response to the rule not being satisfied, the indication that indicates that the resource is not available.
7. The system of any preceding clause, wherein the one or more processors further:
   compare the parameter of the output to a plurality of thresholds to validate the output, wherein the plurality of thresholds include two or more of: a limitation for the resource from a regulation of a geographical region associated with the electronic account, a limitation for the resource established by an entity of the electronic account, a limitation for the resource based on the utilization data, or a constraint on the resource associated with a group of electronic accounts comprising the electronic account.
8. The system of any preceding clause, wherein the one or more processors further:
   store at least one of: the data set, the data structure, and the output in a data repository as a record data structure associated with the electronic account; and
   associate a record identifier with the record data structure; and
   retrieve the stored record data structure in response to a subsequent request comprising the record identifier.
9. The system of any preceding clause, wherein the one or more processors further:
   format the indication for display in accordance with a format for the interface of the remote device selected from a plurality of formats of interfaces based on a type of the remote device, wherein each format of the plurality of formats of interfaces defines at least one of a data entity, a data format, or a communication protocol for transmitting the indication to the remote device.
10. The system of any preceding clause, wherein the one or more processors further
   validate the output based on a comparison of a type of the output with the threshold for the type of the output, wherein the threshold is defined based on a constraint that is defined by a regulation of a geographical area associated with the electronic account.
11. The system of any preceding clause, wherein the one or more processors further:
   authenticate a user associated with the request using authentication information associated with the electronic device;
   retrieve, responsive to the authentication, the data set from a data repository.
12. The system of any preceding clause, wherein the one or more processors further generate the prompt using a template selected from a plurality of prompt templates, wherein each prompt template is associated with a type of the resource of a plurality of types of resources.
13. The system of any preceding clause, wherein the one or more processors further:
   transmit for display, via the interface of the remote device, a visualization comprising one of a chart or a graph of the output indicating a remaining balance of the resource.
14. The system of any preceding clause, wherein the one or more processors further:
   generate, in response to the validation of the output, a control instruction, the control instruction comprising at least one of: a resource identifier, an account identifier, or a validated parameter of the output corresponding to the resource;
   transmit, via an application programming interface, the control instruction to a remote system associated with the electronic account to cause the remote system to execute an automated operation for processing the resource;
   and receive, from the remote system, a confirmation that the automated operation for processing the resource is executed.
15. The system of clause 14, wherein the automated operation comprises at least one of: an operation to update a leave balance of the electronic account, an operation to initiate a payroll process of the electronic account, an operation to record an expense reimbursement for the electronic account, or an operation to modify an entitlement record for the electronic account.
16. A method, comprising:
   retrieving, by one or more processors coupled with memory, responsive to a request from a remote device for bandwidth of a resource of an electronic account, a data set corresponding to the resource and comprising utilization data of the resource and a constraint related to the resource;
   constructing, by the one or more processors, based on the data set, a data structure to replace the request, the data structure indicating a context of the data structure and one or more characteristics of the electronic account, the one or more characteristics indicative of a parameter for the resource and data associated with the electronic account.
   generating, by the one or more processors, based on the data structure, a prompt with a first portion corresponding to the constraint for the parameter of the resource and a second portion corresponding to the utilization data of the resource according to geographical data;
   identifying, by the one or more processors, based on the prompt, a model trained with generative artificial intelligence to determine resource bandwidth based on the one or more characteristics and according to the context;
   inputting, by the one or more processors, the prompt into the model to generate an output that indicates the bandwidth of the resource;
   validating, by the one or more processors, the output based on a comparison with a threshold; and
   transmitting for display, by the one or more processors, via an interface, responsive to the validation, to the remote device an indication of the bandwidth of the resource output by the model on a display of the remote device.
17. The method of clause 16, comprising:
   constructing, by the one or more processors, based on at least on a type of the resource, a type of a data structure for the type of the resource;
   selecting, by the one or more processors, based on the type of the data structure, a type of the prompt from a plurality of types of prompts; and
   generating, by the one or more processors, responsive to the selection, the prompt.
18. The method of clause 17, comprising:
   identifying, by the one or more processors, historical data corresponding to the resource, the historical data indicative of a prior utilization of the resource associated with the electronic account;
   comparing, by the one or more processors, the output to the historical data to determine whether the output deviates from the historical data by more than a deviation threshold;
   generating, by the one or more processors, responsive to the output deviating from the historical data by more than the deviation threshold, an anomaly alert; and
   storing, by the one or more processors, the anomaly alert in a data repository in association with the electronic account.
19. The method of any of clauses 16 to 18, wherein the resource comprises at least one of: a leave entitlement, a payroll compensation, a reimbursement, an expense item, a training credit, a travel allowance, a retirement plan contribution, a stock option, or an access permission.
20. The method of any of clauses 16 to 19, further comprising carrying out the steps of any of clauses 1 to 15.
21. A non-transitory computer-readable media storing instructions which, when executed by one or more processors, cause the one or more processors to:
   retrieve, responsive to a request from a remote device for bandwidth of a resource of an electronic account, a data set corresponding to the resource and comprising utilization data of the resource and a constraint related to the resource;
   construct, based on the data set, a data structure to replace the request, the data structure indicating a context of the data structure and one or more characteristics of the electronic account, the one or more characteristics indicative of a parameter for the resource and data associated with the electronic account.
   generate, based on the data structure, a prompt with a first portion corresponding to the constraint for the parameter of the resource and a second portion corresponding to the utilization data of the resource according to geographical data;
   identify, based on the prompt, a model trained with generative artificial intelligence to determine resource bandwidth based on the one or more characteristics and according to the context;
   input the prompt into the model to generate an output that indicates the bandwidth of the resource;
   validate the output based on a comparison with a threshold; and
   transmit for display, via an interface, responsive to the validation, to the remote device an indication of the bandwidth of the resource output by the model on a display of the remote device.
22. The non-transitory computer-readable media of clause 21 storing instructions which, when executed by one or more processors, cause the one or more processors to carry out the method of any of clauses 16 to 19.
23. The non-transitory computer-readable media of clause 21 storing instructions which, when executed by one or more processors, cause the one or more processors to carry out the method steps of any of clauses 1 to 15.

## Claims

1. A system, comprising:
one or more processors, coupled with memory, to:
retrieve, responsive to a request from a remote device for bandwidth of a resource of an electronic account, a data set corresponding to the resource and comprising utilization data of the resource and a constraint related to the resource;
construct, based on the data set, a data structure to replace the request, the data structure indicating a context of the data structure and one or more characteristics of the electronic account, the one or more characteristics indicative of a parameter for the resource and data associated with the electronic account.
generate, based on the data structure, a prompt with a first portion corresponding to the constraint for the parameter of the resource and a second portion corresponding to the utilization data of the resource according to geographical data;
identify, based on the prompt, a model trained with generative artificial intelligence to determine resource bandwidth based on the one or more characteristics and according to the context;
input the prompt into the model to generate an output that indicates the bandwidth of the resource;
validate the output based on a comparison with a threshold; and
transmit for display, via an interface, responsive to the validation, to the remote device an indication of the bandwidth of the resource output by the model on a display of the remote device.

2. The system of claim 1, wherein the one or more processors further:
construct, based on at least on a type of the resource, a type of a data structure for the type of the resource;
select, based on the type of the data structure, a type of the prompt from a plurality of types of prompts; and
generate, responsive to the selection, the prompt.

3. The system of claim 1 or 2, wherein the one or more processors further:
identify historical data corresponding to the resource, the historical data indicative of a prior utilization of the resource associated with the electronic account;
compare the output to the historical data to determine whether the output deviates from the historical data by more than a deviation threshold;
generate, responsive to the output deviating from the historical data by more than the deviation threshold, an anomaly alert; and
store the anomaly alert in a data repository in association with the electronic account;
and/or
wherein the resource comprises at least one of: a leave entitlement, a payroll compensation, a reimbursement, an expense item, a training credit, a travel allowance, a retirement plan contribution, a stock option, or an access permission.

4. The system of any preceding claim, wherein the one or more processors further:
receive, from the model, a value for the parameter of the resource; and
validate the value of the output based on the comparison of the value with the constraint.

5. The system of any preceding claim, wherein the one or more processors further:
identify a plurality of validation rules to validate the output, each rule of the plurality of validation rules corresponding to at least one of: a regulation for a geographical area corresponding to the resource, a policy of an entity associated with the electronic account, or a limitation of the resource for a project associated with the electronic account;
validate the output according to at least a rule of the plurality of validation rules; and
generate, in response to the rule not being satisfied, the indication that indicates that the resource is not available.

6. The system of any preceding claim, wherein the one or more processors further:
compare the parameter of the output to a plurality of thresholds to validate the output, wherein the plurality of thresholds include two or more of: a limitation for the resource from a regulation of a geographical region associated with the electronic account, a limitation for the resource established by an entity of the electronic account, a limitation for the resource based on the utilization data, or a constraint on the resource associated with a group of electronic accounts comprising the electronic account.

7. The system of any preceding claim, wherein the one or more processors further:
store at least one of: the data set, the data structure, and the output in a data repository as a record data structure associated with the electronic account; and
associate a record identifier with the record data structure; and
retrieve the stored record data structure in response to a subsequent request comprising the record identifier.

8. The system of any preceding claim, wherein the one or more processors further:
format the indication for display in accordance with a format for the interface of the remote device selected from a plurality of formats of interfaces based on a type of the remote device, wherein each format of the plurality of formats of interfaces defines at least one of a data entity, a data format, or a communication protocol for transmitting the indication to the remote device.

9. The system of any preceding claim, wherein the one or more processors further
validate the output based on a comparison of a type of the output with the threshold for the type of the output, wherein the threshold is defined based on a constraint that is defined by a regulation of a geographical area associated with the electronic account; and/or
wherein the one or more processors further:
authenticate a user associated with the request using authentication information associated with the electronic device;
retrieve, responsive to the authentication, the data set from a data repository.

10. The system of any preceding claim, wherein the one or more processors further generate the prompt using a template selected from a plurality of prompt templates, wherein each prompt template is associated with a type of the resource of a plurality of types of resources; and/or
wherein the one or more processors further:
transmit for display, via the interface of the remote device, a visualization comprising one of a chart or a graph of the output indicating a remaining balance of the resource.

11. The system of any preceding claim, wherein the one or more processors further:
generate, in response to the validation of the output, a control instruction, the control instruction comprising at least one of: a resource identifier, an account identifier, or a validated parameter of the output corresponding to the resource;
transmit, via an application programming interface, the control instruction to a remote system associated with the electronic account to cause the remote system to execute an automated operation for processing the resource;
and receive, from the remote system, a confirmation that the automated operation for processing the resource is executed; and optionally
wherein the automated operation comprises at least one of: an operation to update a leave balance of the electronic account, an operation to initiate a payroll process of the electronic account, an operation to record an expense reimbursement for the electronic account, or an operation to modify an entitlement record for the electronic account.

12. A method, comprising:
retrieving, by one or more processors coupled with memory, responsive to a request from a remote device for bandwidth of a resource of an electronic account, a data set corresponding to the resource and comprising utilization data of the resource and a constraint related to the resource;
constructing, by the one or more processors, based on the data set, a data structure to replace the request, the data structure indicating a context of the data structure and one or more characteristics of the electronic account, the one or more characteristics indicative of a parameter for the resource and data associated with the electronic account.
generating, by the one or more processors, based on the data structure, a prompt with a first portion corresponding to the constraint for the parameter of the resource and a second portion corresponding to the utilization data of the resource according to geographical data;
identifying, by the one or more processors, based on the prompt, a model trained with generative artificial intelligence to determine resource bandwidth based on the one or more characteristics and according to the context;
inputting, by the one or more processors, the prompt into the model to generate an output that indicates the bandwidth of the resource;
validating, by the one or more processors, the output based on a comparison with a threshold; and
transmitting for display, by the one or more processors, via an interface, responsive to the validation, to the remote device an indication of the bandwidth of the resource output by the model on a display of the remote device.

13. The method of claim 12, comprising:
constructing, by the one or more processors, based on at least on a type of the resource, a type of a data structure for the type of the resource;
selecting, by the one or more processors, based on the type of the data structure, a type of the prompt from a plurality of types of prompts; and
generating, by the one or more processors, responsive to the selection, the prompt; and/or
wherein the resource comprises at least one of: a leave entitlement, a payroll compensation, a reimbursement, an expense item, a training credit, a travel allowance, a retirement plan contribution, a stock option, or an access permission.

14. The method of claim 13, comprising:
identifying, by the one or more processors, historical data corresponding to the resource, the historical data indicative of a prior utilization of the resource associated with the electronic account;
comparing, by the one or more processors, the output to the historical data to determine whether the output deviates from the historical data by more than a deviation threshold;
generating, by the one or more processors, responsive to the output deviating from the historical data by more than the deviation threshold, an anomaly alert; and
storing, by the one or more processors, the anomaly alert in a data repository in association with the electronic account.

15. A non-transitory computer-readable media storing instructions which, when executed by one or more processors, cause the one or more processors to:
retrieve, responsive to a request from a remote device for bandwidth of a resource of an electronic account, a data set corresponding to the resource and comprising utilization data of the resource and a constraint related to the resource;
construct, based on the data set, a data structure to replace the request, the data structure indicating a context of the data structure and one or more characteristics of the electronic account, the one or more characteristics indicative of a parameter for the resource and data associated with the electronic account.
generate, based on the data structure, a prompt with a first portion corresponding to the constraint for the parameter of the resource and a second portion corresponding to the utilization data of the resource according to geographical data;
identify, based on the prompt, a model trained with generative artificial intelligence to determine resource bandwidth based on the one or more characteristics and according to the context;
input the prompt into the model to generate an output that indicates the bandwidth of the resource;
validate the output based on a comparison with a threshold; and
transmit for display, via an interface, responsive to the validation, to the remote device an indication of the bandwidth of the resource output by the model on a display of the remote device.
